(19) Europäisches Patentamt / European Patent Office / Office européen des brevets

(11) **EP 4 506 872 B1**

(12) **EUROPEAN PATENT SPECIFICATION**

(45) Date of publication and mention
of the grant of the patent:
**27.05.2026 Bulletin 2026/22**

(21) Application number: **23795063.9**

(22) Date of filing: **14.04.2023**

(51) International Patent Classification (IPC):
**G06Q 10/0631** (2023.01)    **G06Q 10/08** (2024.01)
**G06Q 50/04** (2012.01)    **G06N 3/04** (2023.01)
**G06N 3/08** (2023.01)    **G06N 5/01** (2023.01)

(52) Cooperative Patent Classification (CPC):
**G06N 5/01; G06N 3/04; G06N 3/08; G06Q 10/0631;
G06Q 10/08; G06Q 50/04**

(86) International application number:
**PCT/CN2023/088333**

(87) International publication number:
**WO 2023/207630 (02.11.2023 Gazette 2023/44)**

(54) **TASK SOLVING METHOD AND APPARATUS THEREFOR**

**AUFGABENLÖSUNGSVERFAHREN UND VORRICHTUNG DAFÜR**

**PROCÉDÉ DE RÉSOLUTION DE TÂCHE ET APPAREIL À CET EFFET**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.04.2022 CN 202210454870**

(43) Date of publication of application:
**12.02.2025 Bulletin 2025/07**

(73) Proprietor: **Huawei Technologies Co., Ltd.
Shenzhen, Guangdong 518129 (CN)**

(72) Inventors:
• **CHEN, Qiong
Shenzhen, Guangdong 518129 (CN)**
• **SUN, Yinlei
Shenzhen, Guangdong 518129 (CN)**
• **ZHOU, Jie
Shenzhen, Guangdong 518129 (CN)**

(74) Representative: **Grünecker Patent- und
Rechtsanwälte
PartG mbB
Leopoldstraße 4
80802 München (DE)**

(56) References cited:
CN-A- 107 491 863    CN-A- 113 255 967
CN-A- 114 169 573    CN-A- 114 237 835
US-A1- 2011 119 338

• **RALPHS TED ET AL: "Industrial and Systems
Engineering Parallel Solvers for Mixed Integer
Linear Optimization", COR@L TECHNICAL
REPORT 16T-014-R3, 30 December 2016
(2016-12-30), pages 1 - 49, XP055790600,
Retrieved from the Internet <URL:http://coral.ie.
lehigh.edu/~ted/files/papers/
ParallelMILPSurvey16.pdf> [retrieved on
20210327]**
• **BERTHOLD TIMO ET AL: "Parallelization of the
FICO Xpress-Optimizer", 6 July 2016, SAT 2015
18TH INTERNATIONAL CONFERENCE, AUSTIN,
TX, USA, SEPTEMBER 24-27, 2015; [LECTURE
NOTES IN COMPUTER SCIENCE; LECT.NOTES
COMPUTER], SPRINGER, BERLIN,
HEIDELBERG, PAGE(S) 251 - 258, ISBN:
978-3-540-74549-5, XP047350345**

**Description**

**TECHNICAL FIELD**

This application relates to the scheduling field, and in particular, to a task solving method and an apparatus thereof.

**BACKGROUND**

A scheduling problem is one of the most common problems in large-scale manufacturing, logistics, production and the like. Scheduling always has different meanings in different scenarios. For example, logistics scheduling mainly means reasonable arrangement and dispatching for vehicles and personnel by logistics companies based on weights, destinations, specifications, urgency, and the like of to-be-shipped goods in a logistics process.

Many scheduling problems (such as production scheduling, line scheduling, and processing network layout) each can be modeled as a mathematical problem for solving. Linear programming (linear programming, LP) is the most widely used modeling method. Mixed integer programming (mixed integer programming, MIP) is a type of solver and is widely used in cloud computing, finance, manufacturing, and other fields. The LP is to solve a minimum value of an objective function under a given set of linear constraints. The MIP is to add, based on the LP, an integer constraint indicating that some or all variables are integers.

In MIP solving, there is only one root node (corresponding to an initial mixed integer programming task) in an initial state. In a solving process, new to-be-solved subnodes are continuously generated through branching. It can be learned that different nodes in MIP tree search may be independent and processed in parallel, and have natural parallelism, that is, the tree search has parallel opportunities in a plurality of dimensions, such as a subtree granularity, a node granularity, and an intra-node granularity.

In an existing implementation, only one parallelism strategy is supported in each MIP solving process, and improvement in acceleration effect of the MIP solving process is limited.

The document "Parallel Solvers for Mixed Integer Linear Optimization" by T. Ralphs et al. relates to the solution of mixed integer linear optimization problems (MILPs) on parallel computing architectures. This may involve a branch-and-bound algorithm, wherein a region of the original optimization problem is partitioned to obtain smaller sub-problems, each of which is recursively solved using the same algorithm. Algorithms may switch strategies from phase to phase, e.g., initially pursuing tree level parallelism for exploring shallow parts of multiple trees during a ramp-up phase, then switching to subtree or node parallelism during the primary phase.

**SUMMARY**

This application discloses a task solving method. In a process of solving a MIP, a parallel mode is determined based on information about a search tree, and the parallel mode may be dynamically selected. Compared with a fixed parallel mode, the parallel mode can improve MIP solving efficiency and shorten computation time.

The invention is defined by the independent claims and further embodiments are set out in the dependent claims.

According to a first aspect, this application provides a task solving method, where the method includes: obtaining a search tree, where the search tree is obtained by solving a mixed integer programming task through branch and bound, the search tree includes a plurality of subnodes including a first subnode and a second subnode, each subnode corresponds to one child task, and the first subnode and the second subnode are to-be-solved subnodes in the plurality of subnodes; and determining a target parallel mode from a plurality of parallel modes based on information about the search tree, and solving at least one of the first subnode and the second subnode in parallel on a first device and a second device based on the target parallel mode, where the information about the search tree includes at least one of first information and second information, the first information is related to a quantity of subnodes on the search tree, and the second information is related to a connection relationship between subnodes on the search tree.

In a possible implementation, the plurality of subnodes may further include a to-be-solved subnode other than the first subnode and the second subnode.

In an existing implementation, when branch and bound parallel processing is performed on the mixed integer programming task, same parallel modes are always used in an entire process. The parallel herein may be understood as that there are a plurality of computing devices (or described as examples), and the plurality of computing devices synchronously perform a solving process of a subnode. However, for different search tree structures, efficiency and precision of solving in different parallel modes are different. For example, for a search tree that includes a subtree having a usually short length, efficiency of a solving process performed by using a node or an intra-node as a granularity is high, and for a search tree that includes a subtree having a usually long length, efficiency of a solving process performed by using a subtree as a granularity is high. In addition, as a solving process is performed, a structure of a search tree also changes. For example, a length of a subtree included in some search trees is usually long, and a length of a subtree included in another search tree is usually short.

In embodiments of this application, in a process of solving a MIP, a parallel mode is determined based on the information about the search tree, and the parallel mode may be dynamically selected. Compared with a fixed parallel mode, the parallel mode can improve MIP solving efficiency and shorten computation time.

In a possible implementation, the plurality of parallel modes include at least one of the following modes: solving, on the first device, a plurality of subnodes included on a first subtree on which the first subnode is located, and solving, on the second device, a plurality of subnodes included on a second subtree on which the second subnode is located, where the first subtree is obtained by solving the first subnode through branch and bound, and the second subtree is obtained by solving the second subnode through branch and bound; or solving the first subnode on the first device without solving a subnode other than the first subnode, and solving the second subnode on the second device without solving a subnode other than the second subnode; or solving the first subnode on the first device according to a first planning algorithm, and solving the first subnode on the second device in parallel according to a second planning algorithm.

It should be understood that, in addition to the foregoing three parallel solving modes, the plurality of parallel modes may further include another parallel solving mode. This is not limited herein.

In a possible implementation, the first planning algorithm and the second planning algorithm are different linear planning algorithms.

In a possible implementation, the information about the search tree includes: a quantity of subnodes on the search tree, or a connection relationship between subnodes on the search tree.

In a possible implementation, the first information includes: a quantity of subnodes of each of a plurality of depths on the search tree, or a quantity of to-be-solved subnodes on the search tree, where the mixed integer programming task corresponds to a root node on the search tree, and the depth indicates a distance between a subnode and the root node.

In a possible implementation, the solving the first subnode or the second subnode in parallel on a first device and a second device based on the target parallel mode includes: solving the first subnode or the second subnode in parallel on the first device and the second device based on the target parallel mode, to obtain an updated search tree, where the updated search tree includes a third subnode and a fourth subnode, and the third subnode and the fourth subnode are to-be-solved subnodes newly added after the first subnode or the second subnode is solved; and the method further includes: determining a target parallel mode from a plurality of parallel modes based on information about the updated search tree, and solving at least one of the third subnode and the fourth subnode in parallel on the first device and the second device based on the target parallel mode, where the plurality of parallel modes include at least one of the following modes: solving, on the first device through branch and bound, a plurality of subnodes included on a third subtree on which the third subnode is located, and solving, on the second device, a plurality of subnodes included on a fourth subtree on which the fourth subnode is located, where the third subtree is obtained by solving the third subnode through branch and bound, and the fourth subtree is obtained by solving the fourth subnode through branch and bound; or solving the third subnode on the first device without solving a subnode other than the third subnode, and solving only the fourth subnode on the second device without solving a subnode other than the fourth subnode; or solving the third subnode on the first device according to the first planning algorithm, and solving the third subnode on the second device in parallel according to the second planning algorithm.

In a possible implementation, the solving a plurality of subnodes included on a first subtree on which the first subnode is located includes: solving a preset quantity of subnodes included on the first subtree on which the first subnode is located; or solving, within preset time, a plurality of subnodes included on the first subtree on which the first subnode is located.

In a possible implementation, the solving a plurality of subnodes included on a second subtree on which the second subnode is located includes: solving a preset quantity of subnodes included on the second subtree on which the second subnode is located; or solving, within preset time, a plurality of subnodes included on the second subtree on which the second subnode is located.

In a possible implementation, the determining a target parallel mode from a plurality of parallel modes based on information about the search tree includes: determining the target parallel mode from the plurality of parallel modes based on the information about the search tree and by using a neural network model.

According to a second aspect, this application provides a task solving apparatus, where the apparatus includes:

an obtaining module, configured to obtain a search tree, where the search tree is obtained by solving a mixed integer programming task through branch and bound, the search tree includes a plurality of subnodes including a first subnode and a second subnode, each subnode corresponds to one child task, and the first subnode and the second subnode are to-be-solved subnodes in the plurality of subnodes; and
a parallel scheduling module, configured to: determine a target parallel mode from a plurality of parallel modes based on information about the search tree, and solve at least one of the first subnode and the second subnode in parallel on a first device and a second device based on the target parallel mode, where the information about the search tree includes at least one of first information and second information, the first information is related to a quantity of subnodes on the search tree, and the second information is related to a connection relationship between subnodes on the search tree.

In a possible implementation, the plurality of parallel modes include at least one of the following modes:

solving, on the first device, a plurality of subnodes included on a first subtree on which the first subnode is located, and solving, on the second device, a plurality of subnodes included on a second subtree on which the second subnode is located, where the first subtree is obtained by solving the first subnode through branch and bound, and the second subtree is obtained by solving the second subnode through branch and bound; or
solving the first subnode on the first device without solving a subnode other than the first subnode, and solving the second subnode on the second device without solving a subnode other than the second subnode; or
solving the first subnode on the first device according to a first planning algorithm, and solving the first subnode on the second device in parallel according to a second planning algorithm.

In a possible implementation, the first information further includes:
a quantity of subnodes of each of a plurality of depths on the search tree, or a quantity of to-be-solved subnodes on the search tree, where the mixed integer programming task corresponds to a root node on the search tree, and the depth indicates a distance between a subnode and the root node.

In a possible implementation, the parallel scheduling module is specifically configured to:

solve the first subnode or the second subnode in parallel on the first device and the second device based on the target parallel mode, to obtain an updated search tree, where the updated search tree includes a third subnode and a fourth subnode, and the third subnode and the fourth subnode are to-be-solved subnodes newly added after the first subnode or the second subnode is solved; and
the method further includes:
determining a target parallel mode from a plurality of parallel modes based on information about the updated search tree, and solving at least one of the third subnode and the fourth subnode in parallel on the first device and the second device based on the target parallel mode, where the plurality of parallel modes include at least one of the following modes:

solving, on the first device through branch and bound, a plurality of subnodes included on a third subtree on which the third subnode is located, and solving, on the second device, a plurality of subnodes included on a fourth subtree on which the fourth subnode is located, where the third subtree is obtained by solving the third subnode through branch and bound, and the fourth subtree is obtained by solving the fourth subnode through branch and bound; or
solving the third subnode on the first device without solving a subnode other than the third subnode, and solving only the fourth subnode on the second device without solving a subnode other than the fourth subnode; or
solving the third subnode on the first device according to the first planning algorithm, and solving the third subnode on the second device in parallel according to the second planning algorithm.

In a possible implementation, the parallel scheduling module is specifically configured to:

solve a preset quantity of subnodes included on the first subtree on which the first subnode is located; or
solve, within preset time, a plurality of subnodes included on the first subtree on which the first subnode is located.

In a possible implementation, the parallel scheduling module is specifically configured to:

solve a preset quantity of subnodes included on the second subtree on which the second subnode is located; or
solve, within preset time, a plurality of subnodes included on the second subtree on which the second subnode is located.

In a possible implementation, the parallel scheduling module is specifically configured to:
determine the target parallel mode from the plurality of parallel modes based on the information about the search tree and by using a neural network model.
In a possible implementation, the first planning algorithm and the second planning algorithm are different linear planning algorithms.
According to a third aspect, an embodiment of this application provides an apparatus, including a memory, a processor, and a bus system. The memory is configured to store a program, and the processor is configured to execute the program in the memory, to perform the method according to any one of the first aspect or the optional implementations of the first aspect.

According to a fourth aspect, an embodiment of this invention further provides a system. The system includes at least one processor, at least one memory, and at least one communication interface, and the processor, the memory, and the communication interface are connected and communicate with each other through a communication bus.

The memory is configured to store application code for executing the foregoing solutions, and the processor controls execution. The processor is configured to execute the application code stored in the memory, to obtain a task scheduling result, where the code stored in the memory may execute the task solving method provided above.

The communication interface is configured to communicate with another device or a communication network, to send the task solving result to the device or the communication network.

According to a fifth aspect, an embodiment of this application provides a computer-readable storage medium. The computer-readable storage medium stores a computer program, and when the computer program is run on a computer, the computer is enabled to perform the method according to any one of the first aspect or the optional implementations of the first aspect.

According to a sixth aspect, an embodiment of this application provides a computer-readable storage medium, where the computer storage medium stores one or more instructions, and when the instructions are executed by one or more computers, the one or more computers are enabled to execute the apparatus according to any one of the second aspect or the optional implementations of the second aspect.

According to a seventh aspect, an embodiment of this application provides a computer program. When the computer program is run on a computer, the computer is enabled to perform the method according to any one of the first aspect or the optional implementations of the first aspect.

According to an eighth aspect, this application provides a chip system. The chip system includes a processor, configured to support a terminal device or a server in implementing a function in the foregoing aspects, for example, sending or processing data or information in the foregoing methods. In a possible design, the chip system further includes a memory. The memory is configured to store a program instruction and data that are necessary for the terminal device or the server. The chip system may include a chip, or may include a chip and another discrete device.

## BRIEF DESCRIPTION OF DRAWINGS

FIG. 1 is a diagram of an application architecture according to an embodiment of this application;
FIG. 2 is a diagram of an architecture of a server according to an embodiment of this application;
FIG. 3a is a diagram of a search tree according to an embodiment of this application;
FIG. 3b is a diagram of a system architecture according to an embodiment of this application;
FIG. 4 is a schematic flowchart of a task solving method according to an embodiment of this application;
FIG. 5 is a diagram of parallel processing according to an embodiment of this application;
FIG. 6 is a diagram of parallel processing according to an embodiment of this application;
FIG. 7 is a diagram of parallel processing according to an embodiment of this application;
FIG. 8 is a diagram of an architecture according to an embodiment of this application;
FIG. 9 is a diagram of an architecture according to an embodiment of this application;
FIG. 10 is a diagram of an architecture according to an embodiment of this application;
FIG. 11 is a diagram of a structure of a task solving apparatus according to an embodiment of this application;
FIG. 12 is a diagram of a structure of a terminal device according to an embodiment of this application;
FIG. 13 is a diagram of a structure of a server according to an embodiment of this application; and
FIG. 14 is a diagram of a structure of a chip according to an embodiment of this application.

## DESCRIPTION OF EMBODIMENTS

The following describes embodiments of this invention with reference to accompanying drawings in embodiments of this invention. Terms used in implementations of this invention are only intended to explain specific embodiments of this invention, and are not intended to limit this invention.

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is only a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

Embodiments of this application may be applied to solving linear programming optimization problems in a plurality of scenarios (such as a supply chain, cloud computing, scheduling, storage optimization, and finance), to accelerate efficiency of solving these problems by a linear programming solver.

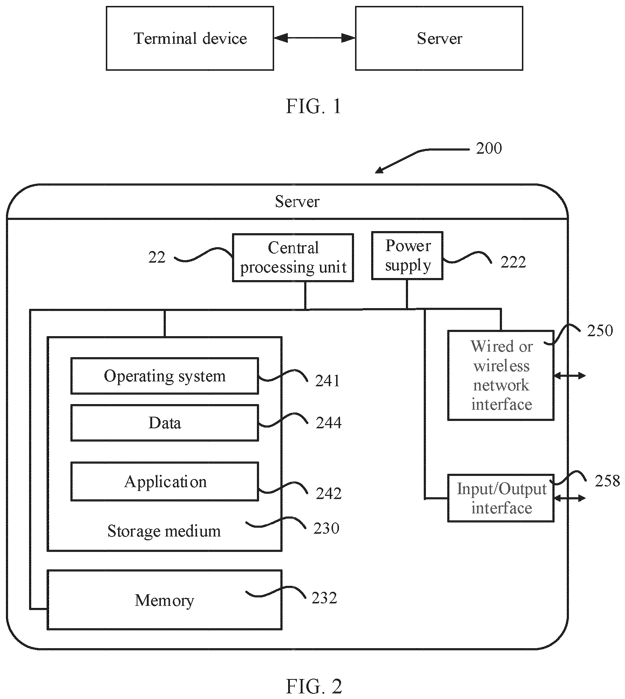

FIG. 1 is a diagram of an application architecture according to an embodiment of this application. In a task solving method provided in this application, a solver may be deployed on a server on a cloud side. A terminal device may transfer a to-be-solved model (for example, a mixed integer programming task in this embodiment of this application) to the server on the cloud side. The server on the cloud side may solve the to-be-solved model based on the solver deployed on the server, and transfer a solving result to the terminal device.

For example, a user may construct the to-be-solved model based on a service scenario of the user. During solving, some historical models of a same type of problem may be transferred to the server, and the server may invoke the solver to quickly output an optimal solution of the model input by the user. Users can use the functions provided by the platform to generate data reports or process the data reports to obtain desired results.

FIG. 2 is a diagram of an architecture of a server according to an embodiment of this application. Specifically, the server 200 is implemented by one or more servers. The server 200 may greatly differ due to different configurations or performance, and may include one or more central processing units (central processing units, CPUs) 22 (for example, one or more processors), a memory 232, one or more storage media 230 (for example, one or more mass storage devices) that store an application 242 or data 244. The memory 232 and the storage medium 230 may be used for transient storage or persistent storage. The program stored in the storage medium 230 may include one or more modules (not shown in the figure), and each module may include a series of corresponding instruction operations on the server. Still further, the central processing unit 22 may be configured to: communicate with the storage medium 230, and perform, on the server 200, the series of instruction operations in the storage medium 230.

The server 200 may further include one or more power supplies 222, one or more wired or wireless network interfaces 250, one or more input/output interfaces 258; and/or one or more operating systems 241, for example, Windows ServerTM, Mac OS XTM, UnixTM, LinuxTM, and FreeBSDTM.

In this embodiment of this application, the central processing unit 22 is configured to perform a task solving method described in embodiments of this application.

It should be understood that the task solving method provided in embodiments of this application may also be used as a solver and deployed on a terminal device on a terminal side. This is not limited herein.

For example, a to-be-solved model in embodiments of this application may be used to resolve a scheduling problem. A scheduling problem is one of the most common problems in large-scale manufacturing, logistics, production and the like, and scheduling always has different meanings in different scenarios. For example, logistics scheduling mainly means reasonable arrangement and dispatching for vehicles and personnel by logistics companies based on weights, destinations, specifications, urgency, and the like of to-be-shipped goods in a logistics process.

In a production environment, the scheduling is to sort tasks and match tasks with production devices in several tasks (job) based on production capacities and production requirements of different machines in different production lines. That is, a plurality of tasks are assigned to production devices in production lines.

For example, in a job-shop scheduling (job-shop scheduling) scenario, n workpieces are processed on m machines, each workpiece has a specific processing technology, a processing sequence of each workpiece and time spent in each process are given, and the processing sequence of the workpieces on each machine is arranged, so that a specific indicator is optimal. There is no requirement that each workpiece is executed by each machine.

For example, in a flow-shop scheduling (flow-shop scheduling) scenario, during scheduling, each task need to be executed in each phase sequentially, and tasks and phases do not need to be matched, but an execution sequence of tasks is mainly determined. This prevents overall completion time from being prolonged due to long waiting time of some tasks.

Different from common goods scheduling, timetabling (timetabling) of workers at airports and in large manufacturing factories is also a type of scheduling. This is because an objective of this type of scheduling is to complete the optimal matching in different time periods based on work characteristics of workers and scenarios. Therefore, the core is sorting and optimal allocation, and whether the task is a person or goods is not limited. Generally speaking, an objective of the scheduling is to obtain a sequence corresponding to a minimum makespan (makespan) for a given quantity of tasks.

In addition, the scheduling problem is a method of allocating resources required by the work in a computer. The resource may mean a virtual computing resource, for example, a thread, a process, or a data flow, or may mean a hardware resource, for example, a processor, a network connection, or an expansion card. A program that performs scheduling is referred to as a scheduler. The scheduler is typically designed to keep all computing resources busy (in load balancing), to allow a plurality of users to share system resources efficiently simultaneously, or to meet specified quality of service.

Many scheduling problems (such as production scheduling, line scheduling, and processing network layout) each can be modeled as a mathematical problem for solving. Linear programming (linear programming, LP) is the most widely used modeling method. At present, among the algorithms that the linear programming solver depends on, a simplex algorithm is the most widely used algorithm, and is also a type of algorithm optimized by each linear programming solver.

Mixed integer programming (mixed integer programming, MIP) is a type of solver and is widely used in cloud computing, finance, manufacturing, and other fields. The LP is to solve a minimum value of an objective function under a given set of linear constraints. The MIP is to add, based on the LP, an integer constraint indicating that some or all variables are integers.

Usually, MIP is a type of NP-hard problem, and computation complexity of the MIP is very high. Currently, the branch and bound (branch and bound, B&B) theory computation model is mainly used as a main solving framework in the industry. The branch and bound method is one of the most commonly used algorithms for solving integer programming problems. The branch and bound method is a search and iterative method that selects different branch variables and sub-problems for branching. Usually, all feasible solving spaces are repeatedly divided into smaller subsets (which may also be referred to as subnodes in embodiments of this application), which is referred to as branching; and a target lower bound (for a minimum value problem) is calculated for a solution set in each subset, which is referred to as bounding. After each time of branching, subsets whose bounds exceed a target value of a known feasible solution set are no longer further branched. In this case, a plurality of subsets may not be considered, which is referred to as pruning.

The branch and bound computation model is essentially a branch and bound tree search implemented based on a queue. The queue stores a current to-be-solved node. An execution procedure of the branch and bound computation model is as follows:

1. Extract a to-be-computed node from a queue according to a node selection algorithm;
2. Solve the node and update upper/lower bound information, where if a computed result does not meet the integer constraint, the node is split into two subnodes;
3. Perform upper/lower bound check on upper/lower bound information, where if a condition is met, the subnode enters the queue; otherwise, perform pruning; and
4. Repeatedly perform the foregoing steps until the queue is empty, that is, there is no to-be-computed node.

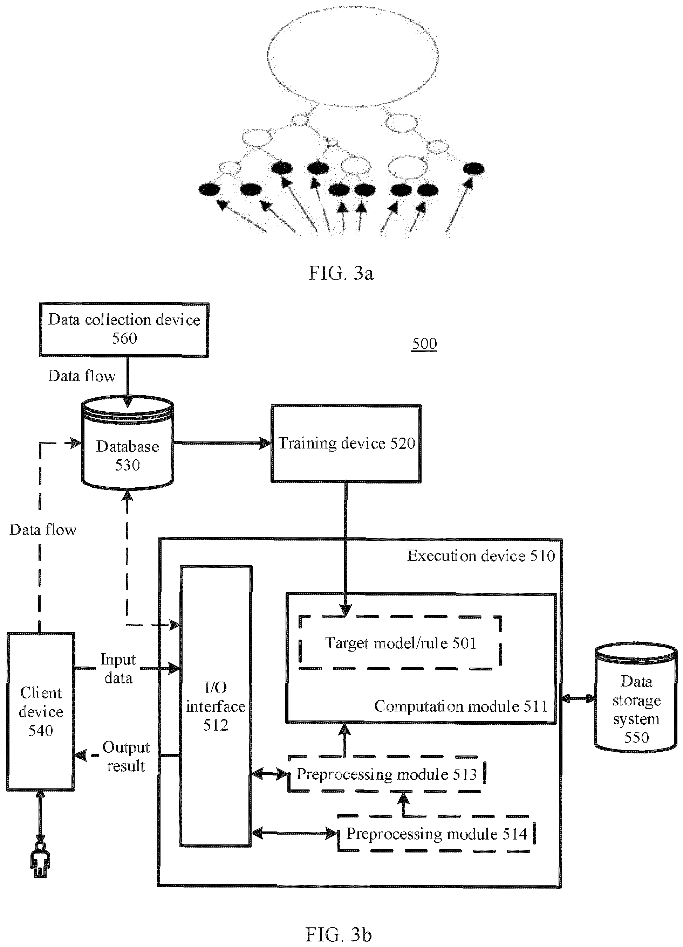

In MIP solving, there is only one root node (corresponding to an initial mixed integer programming task) in an initial state. In a solving process, new to-be-solved nodes are continuously generated through branching. A structure of a dynamic search tree generated by new to-be-solved nodes may be shown in FIG. 3a (black nodes are to-be-solved nodes, and white nodes are solved nodes). It can be learned that different nodes in MIP tree search may be independent and processed in parallel, and have natural parallelism, that is, the tree search has parallel opportunities in a plurality of dimensions, such as a subtree granularity, a node granularity, and an intra-node granularity.

In an existing implementation, only one parallelism strategy is supported in a MIP solving process, and improvement in acceleration effect of the MIP solving process is limited.

The following describes in detail a system architecture provided in embodiments of this application with reference to FIG. 3b. FIG. 3b is a diagram of a system architecture according to an embodiment of this application. As shown in FIG. 3b, a system architecture 500 includes an execution device 510, a training device 520, a database 530, a client device 540, a data storage system 550, and a data collection device 560.

The execution device 510 includes a computation module 511, an I/O interface 512, a preprocessing module 513, and a preprocessing module 514. The computation module 511 may include a target model/rule 501, and the preprocessing module 513 and the preprocessing module 514 are optional.

The data collection device 560 is configured to collect training data.

The training data may be information about a search tree, a solving result, a resource amount consumed in a solving process, or the like.

After the training data is collected, the data collection device 560 stores the training data into the database 530. The training device 520 obtains the target model/rule 501 (for example, a neural network model in this embodiment of this application) through training based on the training data maintained in the database 530.

It should be noted that, during actual application, the training data maintained in the database 530 is not necessarily collected by the data collection device 560, and may also be received from another device. It should further be noted that the training device 520 may not necessarily train the target model/rule 501 completely based on the training data maintained in the database 530, and may obtain training data from a cloud or another place to perform model training. The foregoing description should not be construed as a limitation on embodiments of this application.

The target model/rule 501 obtained through training by the training device 520 may be applied to different systems or devices, for example, the execution device 510 shown in FIG. 3b. The execution device 510 may be a terminal, for example, a mobile phone terminal, a tablet computer, a notebook computer, an augmented reality (augmented reality, AR) device/a virtual reality (virtual reality, VR) device, or a vehicle-mounted terminal; or may be a server, a cloud, or the like. In FIG. 3b, the input/output (input/output, I/O) interface 512 is configured for the execution device 510, and is configured to exchange data with an external device. A user may input data to the I/O interface 512 through the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the computation module 511 may be directly used to process the input data.

When the execution device 510 preprocesses the input data, or when the computation module 511 in the execution device 510 performs a related processing process such as computation, the execution device 510 may invoke data, code, and the like in the data storage system 550 for corresponding processing, or may store data, instructions, and the like obtained through corresponding processing in the data storage system 550.

Finally, the I/O interface 512 presents a processing result to the client device 540, to provide the processing result to the user.

In a case shown in FIG. 3b, the user may manually provide input data, and the "manually providing the input data" may be implemented on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner of displaying, a sound, an action, or the like. The client device 540 may alternatively be used as a data collection terminal, to collect, as new sample data, input data that is input to the I/O interface 512 and that is shown in the figure and an output result output from the I/O interface 512, and store the new sample data in the database 530. Certainly, alternatively, the client device 540 may not perform collection, and the I/O interface 512 directly uses the input data that is input to the I/O interface 512 and that is shown in the figure and the output result output from the I/O interface 512 as new sample data, and stores the new sample data in the database 530.

It should be noted that FIG. 3b is only the diagram of the system architecture according to this embodiment of this application. A position relationship between a device, a component, a module, and the like shown in the figure does not constitute any limitation. For example, in FIG. 3b, the data storage system 550 is an external memory relative to the execution device 510. In another case, the data storage system 550 may alternatively be disposed in the execution device 510.

It should be understood that the execution device 510 may alternatively be deployed in the client device 540.

To make this application clearer, some concepts and processing procedures mentioned in this application are first briefly described.

Linear programming (Linear Programming, LP): Linear programming is an important branch of operations research with early research, rapid development, wide application, and mature methods. Linear programming is a mathematical method that assists people in scientific management. A mathematical theory and method of an extremum problem of linear objective function under linear constraints are studied.

Constraints: are constraints in mathematical programming problems, namely, numerical requirements for decision variables.

Function instance: A function instance is an isolated environment of a function in function computing. If a container is used to isolate a function, the function instance is the isolated container environment that contains the complete running environment of the function.

Subtree parallelism: A plurality of function instances or threads perform parallel computing on a plurality of subtrees in a same search tree. Function instances or threads are independent of each other.

Node parallelism: A plurality of function instances or threads perform parallel computing on a plurality of subnodes on a same search tree. Function instances or threads are independent of each other.

Intra-node parallelism: Parallel computing is performed on a single intra-node, for example, solving LP problems in parallel, using different heuristic algorithms in parallel, and using different cutting plane algorithms in parallel.

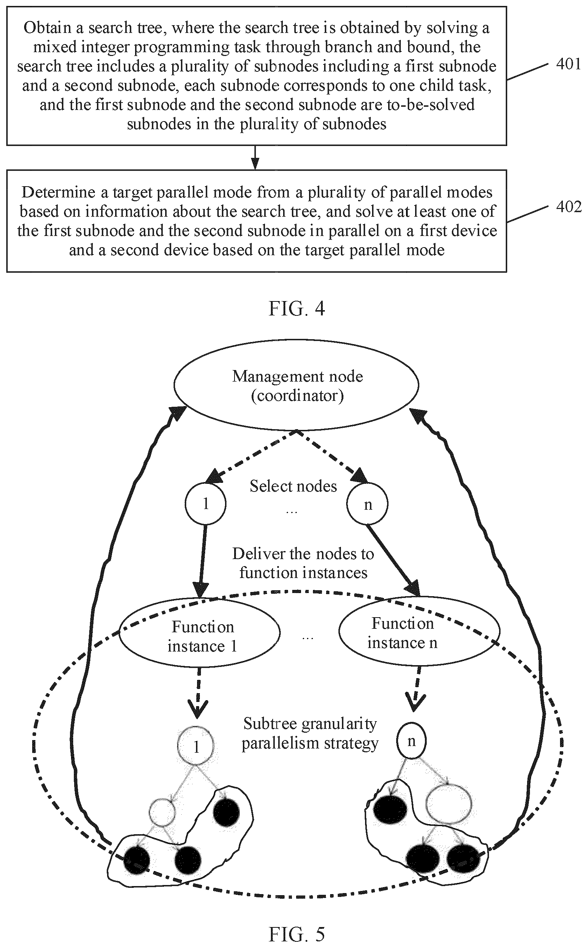

The following describes embodiments of this application with reference to accompanying drawings in embodiments of this application. Terms used in implementations of this application are only used to explain specific embodiments of this application, but are not intended to limit this application. FIG. 4 shows a task solving method according to an embodiment of this application. The method includes the following steps.

401: Obtain a search tree, where the search tree is obtained by solving a mixed integer programming task through branch and bound, the search tree includes a plurality of subnodes including a first subnode and a second subnode, each subnode corresponds to one child task, and the first subnode and the second subnode are to-be-solved subnodes in the plurality of subnodes.

In a possible implementation, step 401 may be performed by a server or a terminal device.

For example, the terminal device may transfer the mixed integer programming task as a to-be-solved model to the server, so that the server may obtain the mixed integer programming task.

In a possible implementation, the mixed integer programming task may include a target function and a constraint condition. The target function is a function designed based on a to-be-optimized target and a variable that affects the target. For example, in a production scheduling problem, the entire objective of production scheduling is usually to find a best processing plan when all resource constraints are met, so that a requirement satisfaction rate is the highest and overall costs are the lowest (for example, costs may include but are not limited to processing costs, inventory costs, and transshipment costs). In this case, the objective function may be a function used to represent maximum satisfaction rates and minimum costs. In addition, the constraint condition means another constraint condition that needs to be met in a process of solving the objective function. In the mixed integer programming task, at least one to-be-solved variable is constrained to be an integer.

In a possible implementation, the mixed integer programming task is used to allocate a scheduling resource to the at least one to-be-scheduled task, a first planning constraint is a constraint that the scheduling resource meets, and the scheduling resource is a production line, a production device, or a manufacturer.

For example, in a product production scenario, the to-be-scheduled task may be a to-be-produced product, and in a personnel scheduling scenario, the to-be-scheduled task may be a to-be-produced person, or the like. This is not limited in embodiments of this application.

In the product production scenario, each of a plurality of schedulable resource groups may be a production line. For example, in a mobile phone production scenario, each of the plurality of schedulable resource groups may be a production line of a mobile phone assembly, for example, a production line of a battery, a production line of a housing, or a production line of a chip. Correspondingly, each schedulable resource group may include a plurality of schedulable resources, and each of the plurality of schedulable resources is a production device in the production line. For example, the production line of the battery may include a plurality of battery production devices, and the production line of the housing may include a plurality of housing production devices. This is not limited herein.

In the personnel scheduling scenario, each of a plurality of schedulable resource groups may be a time period. For example, in the personnel scheduling scenario, each of the plurality of schedulable resource groups may be a day, for example, may be Monday, Tuesday, Wednesday, or a day in some months. Correspondingly, each schedulable resource group may include a plurality of schedulable resources, and each schedulable resource in the plurality of schedulable resources is a sub-time period in the time period, for example, a day may include a plurality of hours, a plurality of minutes, or a plurality of other sub-time periods. This is not limited herein.

In a possible implementation, when a solver performs branch and bound processing on the mixed integer programming task, the solver (for example, a coordinator node (coordinator) of the solver) may be responsible for steps that need to be performed in series in the branch and bound. For example, the coordinator may have a built-in queue for to-be-solved nodes, and is responsible for task assignment and control that is for an entire solving procedure (for example, may perform functions such as preprocessing, node selection, upper/lower bound checking, and maintain the node queue based on a local state).

In a possible implementation, branch and bound processing may be performed on the mixed integer programming task, to perform solving, splitting, and pruning on the mixed integer programming task, to form a search tree including a plurality of subnodes. The plurality of subnodes on the search tree may include a plurality of solved subnodes and a plurality of to-be-solved subnodes. There is a connection relationship between subnodes based on a split relationship, to form a search tree.

In an existing implementation, when branch and bound parallel processing is performed on the mixed integer programming task, same parallel modes are always used in an entire process. The parallel herein may be understood as that there are a plurality of computing devices (or described as examples), and the plurality of computing devices synchronously perform a solving process of a subnode.

For example, in a possible implementation, the to-be-solved subnode may include a subnode 1 and a subnode 2, and the computing device may include a computing device 1 and a computing device 2.

In a parallel mode 1 (parallelism by using a node as a granularity), after solving the subnode 1 to obtain a solving result of the subnode 1 and an update result of the subnode (determining, based on the solving result, whether to split the subnode), the computing device 1 may transfer the solving result and the update result of the subnode to the coordinator node (coordinator) of the solver, to complete solving of the current round. Similarly, after solving the subnode 2 to obtain a solving result of the subnode 2 and an update result of the subnode (determining, based on the solving result, whether to split the subnode), the computing device 2 may transfer the solving result and the update result of the subnode to the coordinator node (coordinator) of the solver, to complete solving of the current round. A solving process in which the computing device 1 solves the subnode 1 and a solving process in which the computing device 2 solves the subnode 2 are performed in parallel.

In a parallel mode 2 (parallelism by using a subtree as a granularity), the computing device 1 solves the subnode 1 and a plurality of subnodes obtained by splitting the subnode 1 (or splitting subnodes obtained through splitting), until solving time reaches a preset value or a quantity of solved subnodes reaches a preset value, to obtain solving results of the plurality of subnodes and update results of the subnodes (determining, based on the solving results, whether to split the subnodes). The computing device 1 may transfer the solving results and the update results of the subnodes to a coordinator node (coordinator) of the solver, to complete solving of the current round. Similarly, the computing device 2 solves the subnode 2 and a plurality of subnodes obtained by splitting the subnode 2 (or splitting subnodes obtained through splitting), until solving time reaches a preset value or a quantity of solved subnodes reaches a preset value, to obtain solving results of the plurality of subnodes and update results of the subnodes (determining, based on the solving results, whether to split the subnodes). The computing device 2 may transfer the solving results and the update results of the subnodes to a coordinator node (coordinator) of the solver, to complete solving of the current round. A solving process in which the computing device 1 solves the plurality of subnodes including the subnode 1 and a solving process in which the computing device 2 solves the plurality of subnodes including the subnode 2 are performed in parallel.

The subtree in which the subnode is located may be understood as a plurality of subnodes obtained by splitting the subnode (or splitting the subnode obtained through splitting).

In a parallel mode 3 (parallelism by using an intra-node as a granularity), the computing device 1 solves the subnode 1 according to a linear programming algorithm 1. Similarly, the computing device 2 solves the subnode 1 according to a linear programming algorithm 2 (different from the linear programming algorithm 1). After the computing device 1 and the computing device 2 first obtain a solving result of the subnode 1 and an update result of the subnode (determining, based on the solving result, whether to split the subnode), the computing device 1 and the computing device 2 may transfer the solving result and the update result of the subnode to the coordinator node (coordinator) of the solver, to complete solving of the current round. A process of solving the subnode 1 by the computing device 1 according to the linear planning algorithm 1 and a process of solving the subnode 1 by the computing device 2 according to the linear planning algorithm 2 are performed in parallel.

However, for different search tree structures, efficiency and precision of solving in different parallel modes are different. For example, for a search tree that includes a subtree having a usually short length, efficiency of a solving process performed by using a node or an intra-node as a granularity is high, and for a search tree that includes a subtree having a usually long length, efficiency of a solving process performed by using a subtree as a granularity is high. In addition, as a solving process is performed, a structure of a search tree also changes. For example, a length of a subtree included in some search trees is usually long, and a length of a subtree included in another search tree is usually short.

In this embodiment of this application, to improve solving efficiency and precision of the mixed integer programming task, the parallel mode may be dynamically updated based on information about the search tree in the solving process.

The following describes the information about the search tree in embodiments of this application.

In a possible implementation, a solver (for example, a coordinator node (coordinator) of the solver) may obtain the information about the search tree, where the information about the search tree may describe a structure feature of a subnode on the search tree, and the structure feature may include a connection relationship (second information) between subnodes and/or a quantity feature (first information) of the subnodes.

In a possible implementation, the information about the search tree may include: a quantity of subnodes on the search tree, or a connection relationship between subnodes on the search tree.

In a possible implementation, the first information specifically includes: a quantity of subnodes of each of a plurality of depths on the search tree, or a quantity of to-be-solved subnodes on the search tree, where the mixed integer programming task corresponds to a root node on the search tree, and the depth indicates a distance between a subnode and the root node.

For example, when a next round of solving process is performed, a quantity of to-be-solved nodes in the to-be-searched tree at a current moment may be used as the information about the search tree. For example, the information about the search tree may be indicated by $\lambda_k$, and $\lambda_k$ may indicate a quantity of to-be-solved nodes in a dynamic search tree, for example, a quantity of black nodes in FIG. 3a.

For example, when a next round of solving process is performed, a quantity of nodes at each layer in depth of the to-be-searched tree at the current moment may be used as the information about the search tree. For example, $W_d$ may indicate a quantity of nodes at a $d^{th}$ layer on the search tree; and $\gamma_k$ may indicate a sequence formed by a quantity of nodes at each layer in the tree at a k moment, where a maximum depth of the tree at the k moment is d, that is, $\gamma_k = (W_0 \dots, W_d)$.

The depth herein may be understood as a distance between a subnode and the root node. For example, depths of two leftmost to-be-solved subnodes in FIG. 3a are 4 (that is, three subnodes are separated from the root node, and a default depth of the root node is 0).

In a possible implementation, the information about the search tree includes a quantity of nodes of a plurality of depths, and the quantity of depths is also less than a preset value, that is, a subnode whose generation time is close to a current moment is selected. In the solving process, the depth of the dynamic search tree increases continuously, that is, historical information increases continuously. However, because information that is far from the current moment usually has marginal effect on the decision-making, the optimization idea of a sliding window may be adopted, that is, only the historical information within the window with a size of h is used as the information about the search tree and input to the neural network, to resolve the problem that an input dimension may be explosive.

402: Determine a target parallel mode from a plurality of parallel modes based on the information about the search tree, and solve at least one of the first subnode and the second subnode in parallel on a first device and a second device based on the target parallel mode, where the information about the search tree includes at least one of first information and second information, the first information is related to a quantity of subnodes on the search tree, and the second information is related to a connection relationship between subnodes on the search tree.

In a possible implementation, the plurality of parallel modes include at least one of the following modes:

solving, on the first device, a plurality of subnodes included on a first subtree on which the first subnode is located, and solving, on the second device, a plurality of subnodes included on a second subtree on which the second subnode is located, where the first subtree is obtained by solving the first subnode through branch and bound, and the second subtree is obtained by solving the second subnode through branch and bound; or
solving the first subnode on the first device without solving a subnode other than the first subnode, and solving the second subnode on the second device without solving a subnode other than the second subnode; or
solving the first subnode on the first device according to a first planning algorithm, and solving the first subnode on the second device in parallel according to a second planning algorithm.

In a possible implementation, before a next round of solving process is performed, a parallel mode of the next round of solving process may be determined based on the information about the search tree.

For example, in a possible implementation, the to-be-solved subnode may include a subnode 1 and a subnode 2, and the computing device may include a computing device 1 and a computing device 2.

In a parallel mode 1 (parallelism by using a node as a granularity), after solving the subnode 1 to obtain a solving result of the subnode 1 and an update result of the subnode (determining, based on the solving result, whether to split the subnode), the computing device 1 may transfer the solving result and the update result of the subnode to the coordinator node (coordinator) of the solver, to complete solving of the current round. Similarly, after solving the subnode 2 to obtain a solving result of the subnode 2 and an update result of the subnode (determining, based on the solving result, whether to split the subnode), the computing device 2 may transfer the solving result and the update result of the subnode to the coordinator node (coordinator) of the solver, to complete solving of the current round. A solving process in which the computing device 1 solves the subnode 1 and a solving process in which the computing device 2 solves the subnode 2 are performed in parallel.

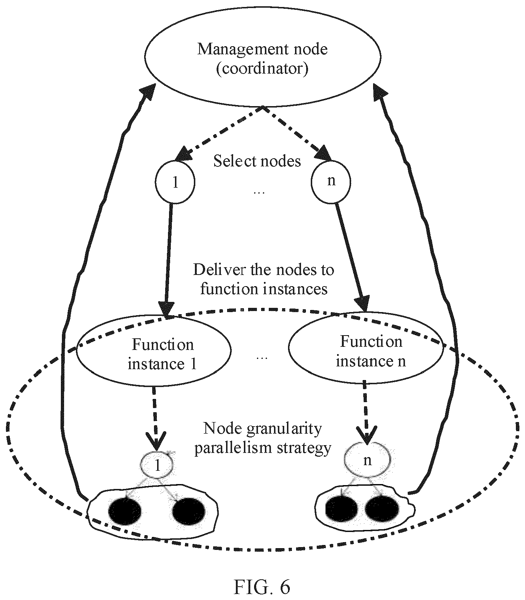

FIG. 6 is a diagram of parallelism by using a node as a granularity. The coordinator selects n nodes from a queue of to-be-computed nodes, and configures n function instances. The coordinator sets a function instance to compute only one node, that is, after the received node is computed, two subnodes are obtained through splitting and inserted into the queue of to-be-computed nodes of the coordinator. After all function instances are computed, status information of all the function instances is synchronized to the coordinator.

In a parallel mode 2 (parallelism by using a subtree as a granularity), the computing device 1 solves the subnode 1 and a plurality of subnodes obtained by splitting the subnode 1 (or splitting subnodes obtained through splitting), until solving time reaches a preset value or a quantity of solved subnodes reaches a preset value, to obtain solving results of the plurality of subnodes and update results of the subnodes (determining, based on the solving results, whether to split the subnodes). The computing device 1 may transfer the solving results and the update results of the subnodes to a coordinator node (coordinator) of the solver, to complete solving of the current round. Similarly, the computing device 2 solves the subnode 2 and a plurality of subnodes obtained by splitting the subnode 2 (or splitting subnodes obtained through splitting), until solving time reaches a preset value or a quantity of solved subnodes reaches a preset value, to obtain solving results of the plurality of subnodes and update results of the subnodes (determining, based on the solving results, whether to split the subnodes). The computing device 2 may transfer the solving results and the update results of the subnodes to a coordinator node (coordinator) of the solver, to complete solving of the current round. A solving process in which the computing device 1 solves the plurality of subnodes including the subnode 1 and a solving process in which the computing device 2 solves the plurality of subnodes including the subnode 2 are performed in parallel.

The subtree in which the subnode is located may be understood as a plurality of subnodes obtained by splitting the subnode (or splitting the subnode obtained through splitting).

FIG. 5 is a diagram of parallelism by using a subtree as a granularity. The coordinator selects n nodes from a queue of to-be-computed nodes, and configures n function instances. The coordinator sets duration that a function instance computes, uses a received corresponding node as a root node, computes a plurality of nodes in the subtree within the set computation duration (or quantity), and then inserts a plurality of remaining subnodes that are not computed into the queue of to-be-computed nodes of the coordinator. After all function instances are computed, status information of all the function instances is synchronized to the coordinator.

In a parallel mode 3 (parallelism by using an intra-node as a granularity), the computing device 1 solves the subnode 1 according to a linear programming algorithm 1. Similarly, the computing device 2 solves the subnode 1 according to a linear programming algorithm 2 (different from the linear programming algorithm 1). After the computing device 1 and the computing device 2 first obtain a solving result of the subnode 1 and an update result of the subnode (determining, based on the solving result, whether to split the subnode), the computing device 1 and the computing device 2 may transfer the solving result and the update result of the subnode to the coordinator node (coordinator) of the solver, to complete solving of the current round. A process of solving the subnode 1 by the computing device 1 according to the linear planning algorithm 1 and a process of solving the subnode 1 by the computing device 2 according to the linear planning algorithm 2 are performed in parallel.

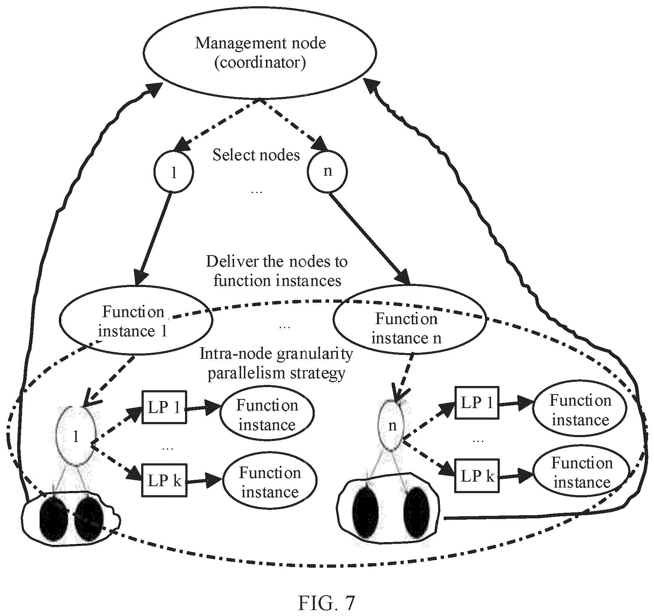

FIG. 7 is a diagram of parallelism by using an intra-node as a granularity. The coordinator selects n nodes from a queue of to-be-computed nodes, and configures n function instances. The coordinator sets a function instance to compute only one node. In a process of computing a receiving node, k sub-function instances are invoked to accelerate computation of an intra-node module (for example, an LP) in parallel until the node completes the computation and two subnodes are split and inserted into the queue of to-be-computed nodes of the coordinator. After all function instances are computed, status information of all the function instances is synchronized to the coordinator.

In a possible implementation, the first subnode or the second subnode may be solved in parallel on a first device and a second device based on the target parallel mode, to obtain a solving result and a newly added subnode (a subnode generated based on the solving result), where the newly added subnode is used to update the search tree to obtain an updated search tree. The updated search tree includes a third subnode and a fourth subnode, where the third subnode and the fourth subnode are to-be-solved subnodes in the updated search tree.

In a possible implementation, in a next round of solving process, that is, after the first subnode or the second subnode is solved in parallel on the first device and the second device based on the target parallel mode, a target parallel mode may be determined from a plurality of parallel modes based on information about the updated search tree, and the third subnode or the fourth subnode is solved in parallel on the first device and the second device based on the target parallel mode. The plurality of parallel modes include at least two of the following modes:

solving, on the first device through branch and bound, a plurality of subnodes included on a third subtree on which the third subnode is located, and solving, on the second device, a plurality of subnodes included on a fourth subtree on which the fourth subnode is located, where the third subtree is obtained by solving the third subnode through branch and bound, and the fourth subtree is obtained by solving the fourth subnode through branch and bound; or
solving the third subnode on the first device without solving a subnode other than the third subnode, and solving only the fourth subnode on the second device without solving a subnode other than the fourth subnode; or
solving the third subnode on the first device according to the first planning algorithm, and solving the third subnode on the second device in parallel according to the second planning algorithm.

In a possible implementation, the foregoing action of determining the target parallel mode from the plurality of parallel modes based on the information about the search tree may be implemented through a pre-trained neural network model, that is, the target parallel mode may be determined from the plurality of parallel modes based on the information about the search tree by using the neural network model.

An input of the neural network model may be information about a search tree, and an output may be a parallel mode and a quantity of parallels. The following describes a neural network model in this embodiment of this application with reference to a specific example.

Table 1 is a manner of defining a prediction label of the neural network model, where $\mu$ may indicate a parallel dimension, and $\mathbf{n}$ may indicate a degree of parallelism.

**Table 1**

| Parallelism strategy ($\mu$, $\mathbf{n}$) | Meaning |
| --- | --- |
| ($\mu$, $\mathbf{n}$)=(0, 4) | Invoke 4 function instances to perform parallelism between subtrees |
| ($\mu$, $\mathbf{n}$)=(1, 4) | Invoke 4 function instances to perform parallelism between nodes |
| ($\mu$, $\mathbf{n}$)=(2, 4) | On the basis of the node granularity, invoke $\eta$ function instances by each intra-node to perform parallelism between intra-nodes |

The parallelism dimension $\mu$=0: subtree granularity; $\mu$=1: node granularity; $\mu$=2: intra-node granularity, and a degree of parallelism in a single intra-node is $\eta$.

Definitions of an indicator for evaluating a decision and a loss function during training of a neural network model may include:

a current change of primal *bound* after a decision: $\Delta Gap\_p_j = \frac{\Delta prim\_bound}{\Delta t \times N}$ ;

a current change of *dual bound* after a decision: $\Delta Gap\_d_j = \frac{\Delta dual\_bound}{\Delta t \times N}$ ;

Loss function: $Loss = \sum_{j=0}^{k} \left( \frac{1}{\Delta Gap\_p_j} + \frac{1}{\Delta Gap\_d_j} \right)$ .

There are two indicators. The first one is a change of primal bound after a decision is made, and the second one is a change of dual bound. Here, t indicates elapsed time, and N indicates an amount of consumed resources, that is, a change of corresponding gap in per unit time and per unit resource. The larger the two indicators are, the better the performance is. In an actual training process of a machine learning model, a minimization target function is usually used, an optional definition is to take reciprocals of the foregoing gaps, and then sum up the reciprocals, to serve as a loss function of the machine learning model.

Offline training on the machine learning model is performed, various parallelism strategies are generated by using a grid search technology, and a change of the gap value in the strategy is recorded. When the preset empirical value is met, decision effect is considered good, and the input feature at the current moment and the corresponding parallelism strategy are recorded as a group of training data of the machine learning model. The collected training data is used for training of the machine learning model, and the loss value is minimized by using a gradient descent algorithm until the model loss function converges. The trained machine learning model is used to perform real-time inference.

In the solving process, the trained machine learning model can be used to perform real-time parallelism strategy for inference and decision-making based on the input features collected by a coordinator module.

An embodiment of this application provides a task solving method, where the method includes: obtaining a search tree, where the search tree is obtained by solving a mixed integer programming task through branch and bound, the search tree includes a plurality of subnodes including a first subnode and a second subnode, each subnode corresponds to one child task, and the first subnode and the second subnode are to-be-solved subnodes in the plurality of subnodes; and determining a target parallel mode from a plurality of parallel modes based on information about the search tree, and solving at least one of the first subnode and the second subnode in parallel on a first device and a second device based on the target parallel mode, where the information about the search tree includes at least one of first information and second information, the first information is related to a quantity of subnodes on the search tree, and the second information is related to a connection relationship between subnodes on the search tree.

In the foregoing manner, in a process of solving a MIP, a parallel mode is determined based on the information about the search tree, and the parallel mode may be dynamically selected. Compared with a fixed parallel mode, the parallel mode can improve MIP solving efficiency and shorten computation time.

The following describes a software architecture of a task solving method in an embodiment of this application.

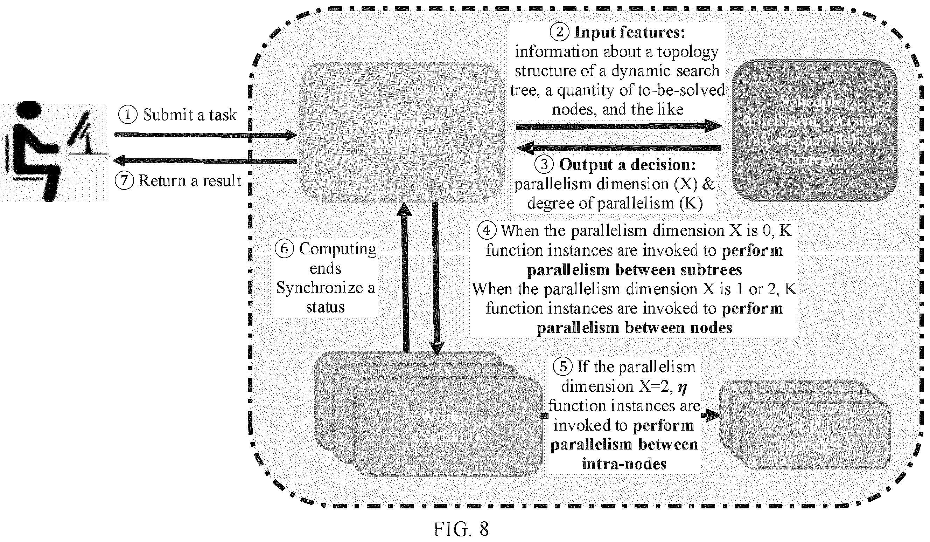

FIG. 8 is a diagram of a software architecture of a task solving method according to an embodiment of this application. As shown in FIG. 8, the method may specifically include the following steps.

(1) A user submits a MIP solving task that defines information about a constraint and a target function of a MIP problem.

(2) After receiving the task, the coordinator performs a series of operations such as reading problems, preprocessing, and root node computation, on the task.

(3) The coordinator collects information such as a topology structure of a dynamic search tree or a quantity of to-be-solved nodes at the current moment as an input feature and sends the input feature to a scheduler module.

(4) The scheduler module provides the input feature information to a built-in machine learning model, infers, in real time, a parallelism strategy (including the parallelism dimension and a degree of parallelism) to be used at the next moment, and sends a result to a coordinator module.

(5) The coordinator module executes a corresponding action based on the received parallelism strategy.

(5.1) The parallelism strategy received by the coordinator module is parallelism between subtrees, for example, $(\mu, \boldsymbol{n})$=(0, 4).

(5.2) The parallelism strategy received by the coordinator module is parallelism between nodes, for example, $(\mu, \boldsymbol{n})$=(1, 4).

(5.3) The parallelism strategy received by the coordinator is parallelism between intra-nodes, for example, $(\mu, \boldsymbol{n})$=(2, 4).

(6) The coordinator module determines whether the optimal solution is obtained or whether all nodes in the dynamic search tree are computed, that is, a queue of to-be-computed nodes is empty. If yes, the computation ends and the process goes to step (7). If no, the process goes to step (3) and the iteration continues.
(7) Return a computed result to the user.

It should be understood that the architecture shown in FIG. 8 decouples MIP serial solving logic, and implements function-based reconstruction of MIP solving by using an atomic capability, for example, a stateful function and a stateless function, of a function computing platform, so that MIP submodules can be invoked by using nested functions.

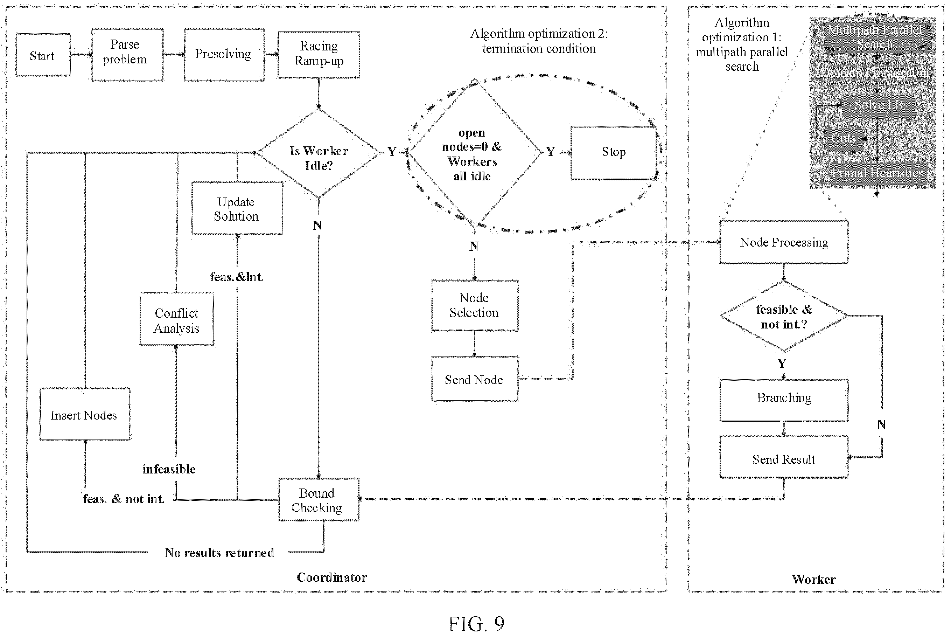

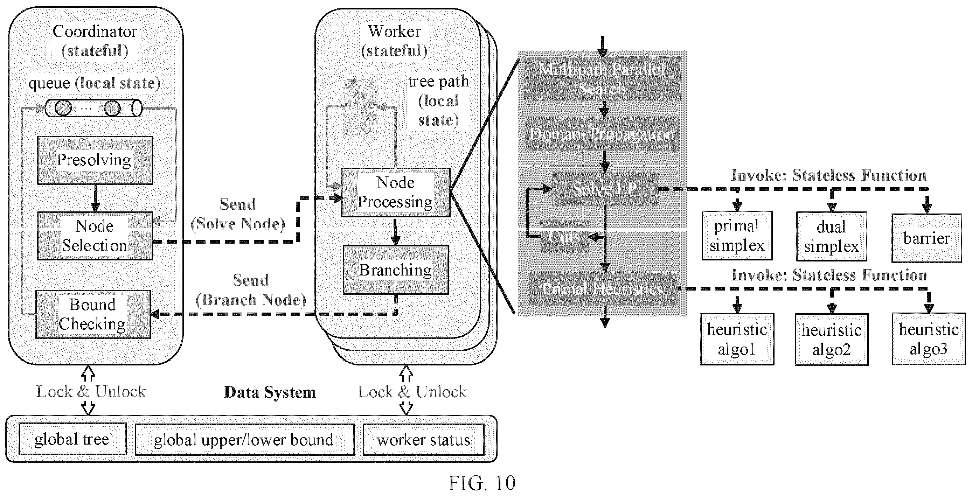

The following describes a task solving method in an embodiment of this application and a diagram of a software architecture in which the task solving method is located. As shown in FIG. 9 and FIG. 10, the method may include the following steps.

(1) Dividing modules that can be parallel in the MIP serial solving procedure specifically includes the following.

(1.1) The serial module can perform the following operations: preprocessing (presolving), node selection (node selection), and upper/lower bound checking (bound checking); and
(1.2) the parallel module can perform the following operations: node processing (node processing) and branching (branching).

(2) That a split module is functionalized through stateful and stateless abstraction includes the following.

(2.1) The coordinator (stateful) can perform the following operations: The coordinator (stateful) has a built-in to-be-solved node queue, is responsible for allocating tasks (such as MIP problems) and controlling the entire solving procedure, and carries the foregoing serial modules;
(2.2) A worker (stateful) can perform the following operations: The worker (stateful) has a built-in current search path (tree path), is responsible for computing and solving tasks, and carries the foregoing parallel modules; and
(2.3) LP & primal heuristic (stateless) can perform the following operations: LP & primal heuristic (stateless) has no built-in state, and respectively carries LP & heuristic module computation in node processing.

(3) That a parallel access mode of critical data is determined specifically includes:

(3.1) local replica data: Each function instance is used to create and store a local replica, for example, LP data. The computing process is based on the replica; and
(3.2) global shared data: The data system is used to store shared data, such as global tree, and locks are added to control concurrent access conflicts.

(4) Optimization of a serial-to-parallel algorithm includes the following.

(4.1) parallel tree search: Each worker maintains a search path of each worker based on a local status to perform multipath parallel search; and
(4.2) main control logic: An iteration termination condition requires that the to-be-solved queue is empty and all workers are idle. In serial mode, only the to-be-solved queue needs to be empty.

(5) Orchestrate the foregoing functions based on the main control logic to construct a MIP computing framework.

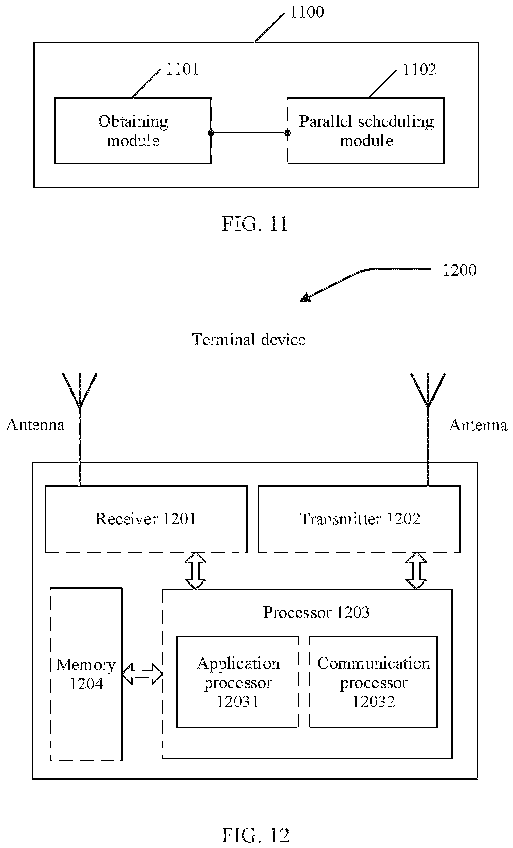

FIG. 11 is a diagram of a structure of a task solving apparatus according to an embodiment of this application. The apparatus 1100 may include:

an obtaining module 1101, configured to obtain a search tree, where the search tree is obtained by solving a mixed integer programming task through branch and bound, the search tree includes a plurality of subnodes including a first subnode and a second subnode, each subnode corresponds to one child task, and the first subnode and the second subnode are to-be-solved subnodes in the plurality of subnodes; and
for specific descriptions of the obtaining module 1101, reference may be made to the descriptions of step 401 in the foregoing embodiment, and details are not described herein again; and
a parallel scheduling module 1102, configured to: determine a target parallel mode from a plurality of parallel modes based on information about the search tree, and solve at least one of the first subnode and the second subnode in parallel on a first device and a second device based on the target parallel mode, where the information about the search tree includes at least one of first information and second information, the first information is related to a quantity of subnodes on the search tree, and the second information is related to a connection relationship between subnodes on the search tree.

In a possible implementation, the plurality of parallel modes include at least one of the following modes:

solving, on the first device, a plurality of subnodes included on a first subtree on which the first subnode is located, and solving, on the second device, a plurality of subnodes included on a second subtree on which the second subnode is located, where the first subtree is obtained by solving the first subnode through branch and bound, and the second subtree is obtained by solving the second subnode through branch and bound; or
solving the first subnode on the first device without solving a subnode other than the first subnode, and solving the second subnode on the second device without solving a subnode other than the second subnode; or
solving the first subnode on the first device according to a first planning algorithm, and solving the first subnode on the second device in parallel according to a second planning algorithm.

For specific descriptions of the parallel scheduling module 1102, reference may be made to the descriptions of step 402 in the foregoing embodiment. Details are not described herein again.

In a possible implementation, the first information further includes:
a quantity of subnodes of each of a plurality of depths on the search tree, or a quantity of to-be-solved subnodes on the search tree, where the mixed integer programming task corresponds to a root node on the search tree, and the depth indicates a distance between a subnode and the root node.

In a possible implementation, the parallel scheduling module is specifically configured to:

solve the first subnode or the second subnode in parallel on the first device and the second device based on the target parallel mode, to obtain an updated search tree, where the updated search tree includes a third subnode and a fourth subnode, and the third subnode and the fourth subnode are to-be-solved subnodes newly added after the first subnode or the second subnode is solved; and
the method further includes:
determining a target parallel mode from a plurality of parallel modes based on information about the updated search tree, and solving at least one of the third subnode and the fourth subnode in parallel on the first device and the second device based on the target parallel mode, where the plurality of parallel modes include at least one of the following modes:

solving, on the first device through branch and bound, a plurality of subnodes included on a third subtree on which the third subnode is located, and solving, on the second device, a plurality of subnodes included on a fourth subtree on which the fourth subnode is located, where the third subtree is obtained by solving the third subnode through branch and bound, and the fourth subtree is obtained by solving the fourth subnode through branch and bound; or
solving the third subnode on the first device without solving a subnode other than the third subnode, and solving only the fourth subnode on the second device without solving a subnode other than the fourth subnode; or
solving the third subnode on the first device according to the first planning algorithm, and solving the third subnode on the second device in parallel according to the second planning algorithm.

In a possible implementation, the parallel scheduling module is specifically configured to:

solve a preset quantity of subnodes included on the first subtree on which the first subnode is located; or
solve, within preset time, a plurality of subnodes included on the first subtree on which the first subnode is located.

In a possible implementation, the parallel scheduling module is specifically configured to:

solve a preset quantity of subnodes included on the second subtree on which the second subnode is located; or
solve, within preset time, a plurality of subnodes included on the second subtree on which the second subnode is located.

In a possible implementation, the parallel scheduling module is specifically configured to:
determine the target parallel mode from the plurality of parallel modes based on the information about the search tree and by using a neural network model.

In a possible implementation, the first planning algorithm and the second planning algorithm are different linear planning algorithms.

An embodiment of this application further provides a system. The system may include a terminal device and a server. The terminal device may perform step 401 and step 402 in the foregoing embodiment based on a to-be-solved model (a mixed integer programming task), to obtain a solving result.

In addition, the terminal device may send the to-be-solved model to the server, and the server may perform step 401 and step 402 in the foregoing embodiment, to obtain a solving result, and send the solving result to the terminal device.

The following describes a terminal device provided in an embodiment of this application. FIG. 12 is a diagram of a structure of a terminal device according to an embodiment of this application. A terminal device 1200 may be specifically a mobile phone, a tablet computer, a notebook computer, an intelligent wearable device, or the like. This is not limited herein. The task solving apparatus described in the embodiment corresponding to FIG. 11 may be deployed on the terminal device 1200, and is configured to implement a task solving function in the embodiment corresponding to FIG. 11. Specifically, the terminal device 1200 includes a receiver 1201, a transmitter 1202, a processor 1203, and a memory 1204 (where there may be one or more processors 1203 in the terminal device 1200, and one processor is used as an example in FIG. 12). The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide instructions and data to the processor 1203. A part of the memory 1204 may further include a non-volatile random access memory (non-volatile random access memory, NVRAM). The memory 1204 stores a processor and operation instructions, an executable module, or a data structure; or a subset thereof; or an extended set thereof. The operation instructions may include various operation instructions used to implement various operations.

The processor 1203 controls an operation of the terminal device. In a specific application, assemblies of the terminal device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 1203, or may be implemented by the processor 1203. The processor 1203 may be an integrated circuit chip with a signal processing capability. During implementation, the steps of the foregoing method may be completed by using a hardware integrated logic circuit in the processor 1203 or instructions in a form of software. The processor 1203 may be a general-purpose processor, a digital signal processor (digital signal processing, DSP), a microprocessor, or a microcontroller. The processor 1203 may further include an application-specific integrated circuit (application-specific integrated circuit, ASIC), a field-programmable gate array (field-programmable gate array, FPGA) or another programmable logic device, a discrete gate or transistor logic device, or a discrete hardware assembly. The processor 1203 may implement or perform the method, the steps, and the logical block diagrams disclosed in embodiments of this application. The general-purpose processor may be a microprocessor, the processor may be any conventional processor, or the like. Steps of the methods disclosed with reference to embodiments of this application may be directly performed and completed by a hardware decoding processor, or may be performed and completed by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory 1204, and the processor 1203 reads information in the memory 1204 and completes the steps related to the terminal device in the foregoing methods in combination with hardware of the processor.

The receiver 1201 may be configured to: receive input digital or character information, and generate signal input related to a related setting and function control of the terminal device. The transmitter 1202 may be configured to output digital or character information through a first interface. The transmitter 1202 may be further configured to send instructions to a disk group through the first interface, to modify data in the disk group. The transmitter 1202 may further include a display device such as a display.

In this embodiment of this application, in one case, the processor 1203 is configured to perform the steps performed by the terminal device in the foregoing embodiment.

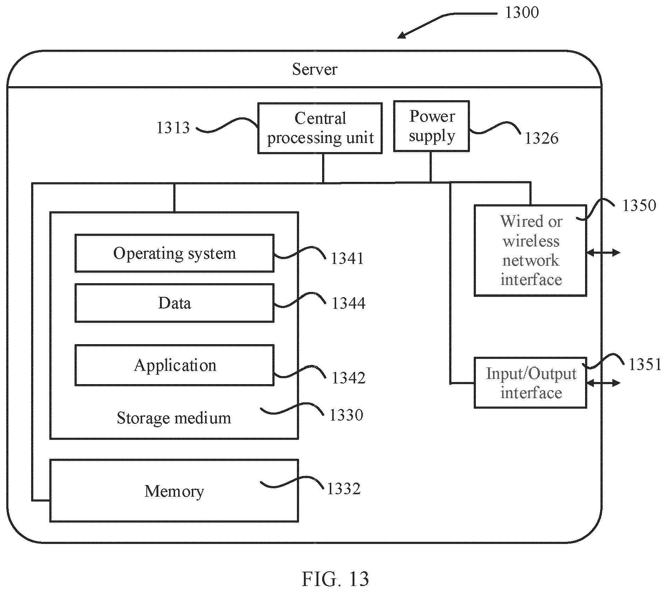

An embodiment of this application further provides a server. FIG. 13 is a diagram of a structure of a server according to an embodiment of this application. Specifically, a server 1300 is implemented by one or more servers. The server 1300 may greatly differ due to different configurations or performance, and may include one or more central processing units (central processing units, CPUs) 1313 (for example, one or more processors) and a memory 1332, one or more storage media 1330 (for example, one or more mass storage devices) that store an application 1342 or data 1344. The memory 1332 and the storage medium 1330 may be transient storage or persistent storage. A program stored in the storage medium 1330 may include one or more modules (not shown in the figure), and each module may include a series of instruction operations on the server. Still further, the central processing unit 1313 may be configured to: communicate with the storage medium 1330, and perform, on the server 1300, the series of instruction operations in the storage medium 1330.

The server 1300 may further include one or more power supplies 1326, one or more wired or wireless network interfaces 1350, one or more input/output interfaces 1351; and/or one or more operating systems 1341, for example, Windows ServerTM, Mac OS XTM, UnixTM, LinuxTM, and FreeBSDTM.

In this embodiment of this application, the central processing unit 1313 is configured to perform steps related to the task solving method in the foregoing embodiments.

An embodiment of this application further provides a computer program product. When the computer program product runs on a computer, the computer is enabled to perform the steps performed by the foregoing terminal device, or the computer is enabled to perform the steps performed by the foregoing server.

An embodiment of this application further provides a computer-readable storage medium. The computer-readable storage medium stores a program for processing a signal, and when the program is run on a computer, the computer is enabled to perform the steps performed by the foregoing terminal device; or the computer is enabled to perform the steps performed by the foregoing server.

The terminal device or the server provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in a terminal device performs the data processing method described in embodiments, or a chip in a server performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

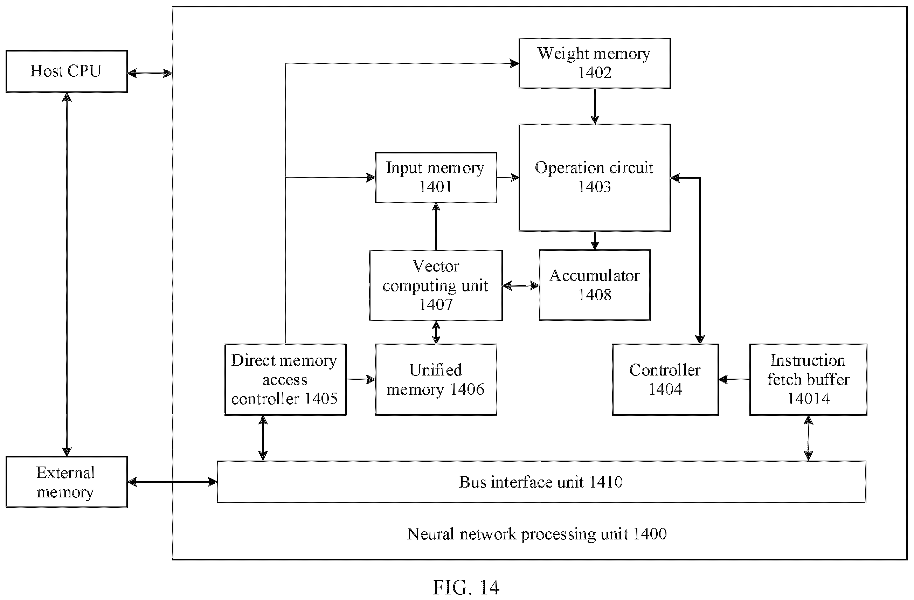

Specifically, FIG. 14 is a diagram of a structure of a chip according to an embodiment of this application. The chip may be represented as a neural network processing unit NPU 1400. The NPU 1400 is mounted to a host CPU (Host CPU) as a coprocessor, and a task is allocated by the host CPU. A core part of the NPU is an operation circuit 1403. The operation circuit 1403 is controlled by a controller 1404 to extract matrix data in a memory and perform a multiplication operation.

In some implementations, the operation circuit 1403 internally includes a plurality of processing units (Process Engine, PEs). In some implementations, the operation circuit 1403 is a two-dimensional systolic array. The operation circuit 1403 may alternatively be a one-dimensional systolic array or another electronic circuit capable of performing mathematical operations such as multiplication and addition. In some implementations, the operation circuit 1403 is a general-purpose matrix processor.

For example, it is assumed that there is an input matrix A, a weight matrix B, and an output matrix C. The operation circuit fetches, from a weight memory 1402, data corresponding to the matrix B, and buffers the data on each PE in the operation circuit. The operation circuit fetches data of the matrix A from an input memory 1401, to perform a matrix operation on the matrix B, and stores an obtained partial result or an obtained final result of the matrix in an accumulator (accumulator) 1408.

A unified memory 1406 is configured to store input data and output data. Weight data is directly transferred to the weight memory 1402 through a direct memory access controller (Direct Memory Access Controller, DMAC) 1405. The input data is also transferred to the unified memory 1406 through the DMAC.

A BIU is a bus interface unit, namely, a bus interface unit 1410, and is configured to perform interaction between an AXI bus and the DMAC and between the AXI bus and an instruction fetch buffer (Instruction Fetch Buffer, IFB) 14014.

The bus interface unit (Bus Interface Unit, BIU for short) 1410 is used by the instruction fetch buffer 14014 to obtain instructions from an external memory, and is further used by the direct memory access controller 1405 to obtain original data of the input matrix A or the weight matrix B from the external memory.

The DMAC is mainly configured to: transfer input data in the external memory DDR to the unified memory 1406, or transfer weight data to the weight memory 1402, or transfer input data to the input memory 1401.

A vector computing unit 1407 includes a plurality of operation processing units. If needed, further processing, for example, vector multiplication, vector addition, an exponential operation, a logarithm operation, or size comparison, is performed on an output of the operation circuit 1403. The vector computing unit 1407 is mainly used for non-convolutional/fully connected layer network computation in a neural network, such as batch normalization (batch normalization), pixel-level summation, and upsampling a feature map.

In some implementations, the vector computing unit 1407 can store a processed output vector in the unified memory 1406. For example, the vector computing unit 1407 may apply a linear function or a nonlinear function to the output of the operation circuit 1403, for example, perform linear interpolation on a feature map extracted from a convolutional layer, and for another example, obtain a vector of an accumulated value to generate an activation value. In some implementations, the vector computing unit 1407 generates a normalized value, a value obtained after pixel-level summation, or a combination thereof. In some implementations, the processed output vector can be used as an activated input to the operation circuit 1403. For example, the processed output vector can be used at a subsequent layer in the neural network.

The instruction fetch buffer (instruction fetch buffer) 14014 connected to the controller 1404 is configured to store instructions used by the controller 1404.

The unified memory 1406, the input memory 1401, the weight memory 1402, and the instruction fetch buffer 14014 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is only an example. The units described as separate parts may or may not be physically separate, and parts displayed as units may or may not be physical units, may be located in one position, or may be distributed on a plurality of network units. Some or all the modules may be selected according to actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A task solving method, wherein the method is computer-implemented and comprises:

   obtaining (401) a search tree, wherein the search tree is obtained by solving a mixed integer programming task through branch and bound, the search tree comprises a plurality of subnodes comprising a first subnode and a second subnode, each subnode corresponds to one child task, and the first subnode and the second subnode are to-be-solved subnodes in the plurality of subnodes; and
   determining (402) a target parallel mode from a plurality of parallel modes based on information about the search tree and by using a neural network model, and solving at least one of the first subnode and the second subnode in parallel on a first device and a second device based on the target parallel mode, wherein the information about the search tree comprises at least one of first information and second information, the first information is related to a quantity of subnodes on the search tree, and the second information is related to a connection relationship between subnodes on the search tree.

2. The method according to claim 1, wherein the plurality of parallel modes comprise at least one of the following modes:

   solving, on the first device, a plurality of subnodes comprised on a first subtree on which the first subnode is located, and solving, on the second device, a plurality of subnodes comprised on a second subtree on which the second subnode is located, wherein the first subtree is obtained by solving the first subnode through branch and bound, and the second subtree is obtained by solving the second subnode through branch and bound; or solving the first subnode on the first device without solving a subnode other than the first subnode, and solving the second subnode on the second device without solving a subnode other than the second subnode; or solving the first subnode on the first device according to a first planning algorithm, and solving the first subnode on the second device in parallel according to a second planning algorithm.

3. The method according to claim 1 or 2, wherein the first information comprises:
a quantity of subnodes of each of a plurality of depths on the search tree, or a quantity of to-be-solved subnodes on the search tree, wherein the mixed integer programming task corresponds to a root node on the search tree, and the depth indicates a distance between a subnode and the root node.

4. The method according to any one of claims 1 to 3, wherein the solving the first subnode or the second subnode in parallel on a first device and a second device based on the target parallel mode comprises:

solving the first subnode or the second subnode in parallel on the first device and the second device based on the target parallel mode, to obtain an updated search tree, wherein the updated search tree comprises a third subnode and a fourth subnode, and the third subnode and the fourth subnode are to-be-solved subnodes newly added after the first subnode or the second subnode is solved; and
the method further comprises:
determining a target parallel mode from a plurality of parallel modes based on information about the updated search tree, and solving at least one of the third subnode and the fourth subnode in parallel on the first device and the second device based on the target parallel mode, wherein the plurality of parallel modes comprise at least one of the following modes:

solving, on the first device through branch and bound, a plurality of subnodes comprised on a third subtree on which the third subnode is located, and solving, on the second device, a plurality of subnodes comprised on a fourth subtree on which the fourth subnode is located, wherein the third subtree is obtained by solving the third subnode through branch and bound, and the fourth subtree is obtained by solving the fourth subnode through branch and bound; or
solving the third subnode on the first device without solving a subnode other than the third subnode, and solving only the fourth subnode on the second device without solving a subnode other than the fourth subnode; or
solving the third subnode on the first device according to the first planning algorithm, and solving the third subnode on the second device in parallel according to the second planning algorithm.

5. The method according to any one of claims 1 to 4, wherein the solving a plurality of subnodes comprised on a first subtree on which the first subnode is located comprises:

solving a preset quantity of subnodes comprised on the first subtree on which the first subnode is located; or
solving, within preset time, a plurality of subnodes comprised on the first subtree on which the first subnode is located.

6. The method according to any one of claims 1 to 5, wherein the solving a plurality of subnodes comprised on a second subtree on which the second subnode is located comprises:

solving a preset quantity of subnodes comprised on the second subtree on which the second subnode is located; or
solving, within preset time, a plurality of subnodes comprised on the second subtree on which the second subnode is located.

7. A task solving apparatus (1100), wherein the apparatus comprises:

an obtaining module (1101), configured to obtain a search tree, wherein the search tree is obtained by solving a mixed integer programming task through branch and bound, the search tree comprises a plurality of subnodes comprising a first subnode and a second subnode, each subnode corresponds to one child task, and the first subnode and the second subnode are to-be-solved subnodes in the plurality of subnodes; and
a parallel scheduling module (1102), configured to: determine a target parallel mode from a plurality of parallel modes based on information about the search tree and by using a neural network model, and solve at least one of the first subnode and the second subnode in parallel on a first device and a second device based on the target parallel mode, wherein the information about the search tree comprises at least one of first information and second information, the first information is related to a quantity of subnodes on the search tree, and the second information is related to a connection relationship between subnodes on the search tree.

8. The apparatus according to claim 7, wherein the plurality of parallel modes comprise at least one of the following modes:

solving, on the first device, a plurality of subnodes comprised on a first subtree on which the first subnode is located, and solving, on the second device, a plurality of subnodes comprised on a second subtree on which the second subnode is located, wherein the first subtree is obtained by solving the first subnode through branch and bound, and the second subtree is obtained by solving the second subnode through branch and bound; or solving the first subnode on the first device without solving a subnode other than the first subnode, and solving the second subnode on the second device without solving a subnode other than the second subnode; or solving the first subnode on the first device according to a first planning algorithm, and solving the first subnode on the second device in parallel according to a second planning algorithm.

9. The apparatus according to claim 7 or 8, wherein the first information comprises:
a quantity of subnodes of each of a plurality of depths on the search tree, or a quantity of to-be-solved subnodes on the search tree, wherein the mixed integer programming task corresponds to a root node on the search tree, and the depth indicates a distance between a subnode and the root node.

10. The apparatus according to any one of claims 7 to 9, wherein the parallel scheduling module is specifically configured to:

solve the first subnode or the second subnode in parallel on the first device and the second device based on the target parallel mode, to obtain an updated search tree, wherein the updated search tree comprises a third subnode and a fourth subnode, and the third subnode and the fourth subnode are to-be-solved subnodes newly added after the first subnode or the second subnode is solved; and determine a target parallel mode from a plurality of parallel modes based on information about the updated search tree, and solving at least one of the third subnode and the fourth subnode in parallel on the first device and the second device based on the target parallel mode, wherein the plurality of parallel modes comprise at least one of the following modes:

solve, on the first device through branch and bound, a plurality of subnodes comprised on a third subtree on which the third subnode is located, and solving, on the second device, a plurality of subnodes comprised on a fourth subtree on which the fourth subnode is located, wherein the third subtree is obtained by solving the third subnode through branch and bound, and the fourth subtree is obtained by solving the fourth subnode through branch and bound; or solve the third subnode on the first device without solving a subnode other than the third subnode, and solving only the fourth subnode on the second device without solving a subnode other than the fourth subnode; or solve the third subnode on the first device according to the first planning algorithm, and solving the third subnode on the second device in parallel according to the second planning algorithm.

11. The apparatus according to any one of claims 7 to 10, wherein the parallel scheduling module is specifically configured to:

solve a preset quantity of subnodes comprised on the first subtree on which the first subnode is located; or solve, within preset time, a plurality of subnodes comprised on the first subtree on which the first subnode is located.

12. A computer storage medium, wherein the computer storage medium stores one or more instructions, and when the instructions are executed by one or more computers, the one or more computers are enabled to perform an operation in the method according to any one of claims 1 to 6.

13. A computer program product, comprising computer-readable instructions, wherein when the computer-readable instructions are run on a computer device, the computer device is enabled to perform the method according to any one of claims 1 to 6.

14. A system, comprising at least one processor, at least one memory, and at least one communication interface, wherein the processor, the memory, and the communication interface are connected and communicate with each other through a communication bus;

the at least one memory is configured to store code;
the at least one processor is configured to execute the code, to perform the task solving method according to any one of claims 1 to 6, to obtain a solving result; and
the at least one communication interface is configured to communicate with a device or a communication network, to send the solving result to the device or the communication network.

**Patentansprüche**

1. Aufgabenlösungsverfahren, wobei das Verfahren computerimplementiert ist und Folgendes umfasst:

Erlangen (401) eines Suchbaums, wobei der Suchbaum durch Lösen einer gemischten ganzzahligen Programmieraufgabe mittels Branch-and-Bound erlangt wird, der Suchbaum eine Vielzahl von Teilknoten, umfassend einen ersten Teilknoten und einen zweiten Teilknoten, umfasst, wobei jeder Teilknoten einer Nachfolgeraufgabe entspricht und der erste Teilknoten und der zweite Teilknoten zu lösende Teilknoten in der Vielzahl von Teilknoten sind; und
Bestimmen (402) eines Zielparallelmodus aus einer Vielzahl von Parallelmodi basierend auf Informationen über den Suchbaum und unter Verwendung eines neuronalen Netzwerkmodells und Lösen von mindestens einem des ersten Teilknotens und des zweiten Teilknotens parallel auf einer ersten Einrichtung und einer zweiten Einrichtung basierend auf dem Zielparallelmodus, wobei die Informationen über den Suchbaum mindestens eines von ersten Informationen und zweiten Informationen umfassen, wobei sich die ersten Informationen auf eine Anzahl von Teilknoten in dem Suchbaum beziehen und sich die zweiten Informationen auf eine Verbindungsbeziehung zwischen Teilknoten in dem Suchbaum beziehen.

2. Verfahren nach Anspruch 1, wobei die Vielzahl von Parallelmodi mindestens einen der folgenden Modi umfasst:

Lösen, auf der ersten Einrichtung, einer Vielzahl von Teilknoten, die in einem ersten Teilbaum, in dem sich der erste Teilknoten befindet, umfasst ist, und Lösen, auf der zweiten Einrichtung, einer Vielzahl von Teilknoten, die in einem zweiten Teilbaum, in dem sich der zweite Teilknoten befindet, umfasst ist, wobei der erste Teilbaum durch Lösen des ersten Teilknotens mittels Branch-and-Bound erlangt wird und der zweite Teilbaum durch Lösen des zweiten Teilknotens mittels Branch-and-Bound erlangt wird; oder
Lösen des ersten Teilknotens auf der ersten Einrichtung ohne Lösen eines anderen Teilknotens als des ersten Teilknotens und Lösen des zweiten Teilknotens auf der zweiten Einrichtung ohne Lösen eines anderen Teilknotens als des zweiten Teilknotens; oder
Lösen des ersten Teilknotens auf der ersten Einrichtung gemäß einem ersten Planungsalgorithmus und Lösen des ersten Teilknotens auf der zweiten Einrichtung parallel dazu gemäß einem zweiten Planungsalgorithmus.

3. Verfahren nach Anspruch 1 oder 2, wobei die ersten Informationen Folgendes umfassen:
eine Anzahl von Teilknoten von jeder einer Vielzahl von Tiefen in dem Suchbaum oder eine Anzahl von zu lösenden Teilknoten in dem Suchbaum, wobei die gemischte ganzzahlige Programmieraufgabe einem Wurzelknoten in dem Suchbaum entspricht und die Tiefe einen Abstand zwischen einem Teilknoten und dem Wurzelknoten anzeigt.

4. Verfahren nach einem der Ansprüche 1 bis 3, wobei das Lösen des ersten Teilknotens oder des zweiten Teilknotens parallel auf einer ersten Einrichtung und einer zweiten Einrichtung basierend auf dem Zielparallelmodus Folgendes umfasst:

Lösen des ersten Teilknotens oder des zweiten Teilknotens parallel auf der ersten Einrichtung und der zweiten Einrichtung basierend auf dem Zielparallelmodus, um einen aktualisierten Suchbaum zu erlangen, wobei der aktualisierte Suchbaum einen dritten Teilknoten und einen vierten Teilknoten umfasst und der dritte Teilknoten und der vierte Teilknoten zu lösende Teilknoten sind, die neu nach dem Lösen des ersten Teilknotens oder des zweiten Teilknotens hinzugefügt wurden; und
wobei das Verfahren ferner Folgendes umfasst:

Bestimmen eines Zielparallelmodus aus einer Vielzahl von Parallelmodi basierend auf Informationen über den aktualisierten Suchbaum und Lösen von mindestens einem des dritten Teilknotens und des vierten Teilknotens parallel auf der ersten Einrichtung und der zweiten Einrichtung basierend auf dem Zielparallelmodus, wobei die Vielzahl von Parallelmodi mindestens einen der folgenden Modi umfasst:

Lösen, auf der ersten Einrichtung, mittels Branch-and-Bound, einer Vielzahl von Teilknoten, die in einem dritten Teilbaum, in dem sich der dritte Teilknoten befindet, umfasst ist, und Lösen, auf der zweiten Einrichtung, einer Vielzahl von Teilknoten, die in einem vierten Teilbaum, in dem sich der vierte Teilknoten befindet, umfasst ist, wobei der dritte Teilbaum durch Lösen des dritten Teilknotens mittels Branch-and-Bound erlangt wird und der vierte Teilbaum durch Lösen des vierten Teilknotens mittels Branch-and-Bound erlangt wird; oder

Lösen des dritten Teilknotens auf der ersten Einrichtung ohne Lösen eines anderen Teilknotens als des dritten Teilknotens und Lösen nur des vierten Teilknotens auf der zweiten Einrichtung ohne Lösen eines anderen Teilknotens als des vierten Teilknotens; oder

Lösen des dritten Teilknotens auf der ersten Einrichtung gemäß dem ersten Planungsalgorithmus und Lösen des dritten Teilknotens auf der zweiten Einrichtung parallel dazu gemäß dem zweiten Planungsalgorithmus.

5. Verfahren nach einem der Ansprüche 1 bis 4, wobei das Lösen einer Vielzahl von Teilknoten, die in einem ersten Teilbaum, in dem sich der erste Teilknoten befindet, umfasst ist, Folgendes umfasst:

Lösen einer voreingestellten Anzahl von Teilknoten, die in dem ersten Teilbaum, in dem sich der erste Teilknoten befindet, umfasst ist; oder

Lösen, innerhalb einer voreingestellten Zeit, einer Vielzahl von Teilknoten, die in dem ersten Teilbaum, in dem sich der erste Teilknoten befindet, umfasst ist.

6. Verfahren nach einem der Ansprüche 1 bis 5, wobei das Lösen einer Vielzahl von Teilknoten, die in einem zweiten Teilbaum, in dem sich der zweite Teilknoten befindet, umfasst ist, Folgendes umfasst:

Lösen einer voreingestellten Anzahl von Teilknoten, die in dem zweiten Teilbaum, in dem sich der zweite Teilknoten befindet, umfasst ist; oder

Lösen, innerhalb einer voreingestellten Zeit, einer Vielzahl von Teilknoten, die in dem zweiten Teilbaum, in dem sich der zweite Teilknoten befindet, umfasst ist.

7. Aufgabenlösungsvorrichtung (1100), wobei die Vorrichtung Folgendes umfasst:

ein Erlangungsmodul (1101), das dazu konfiguriert ist, einen Suchbaum zu erlangen, wobei der Suchbaum durch Lösen einer gemischten ganzzahligen Programmieraufgabe mittels Branch-and-Bound erlangt wird, der Suchbaum eine Vielzahl von Teilknoten, umfassend einen ersten Teilknoten und einen zweiten Teilknoten, umfasst, wobei jeder Teilknoten einer Nachfolgeraufgabe entspricht und der erste Teilknoten und der zweite Teilknoten zu lösende Teilknoten in der Vielzahl von Teilknoten sind; und

ein Parallelplanungsmodul (1102), das zu Folgendem konfiguriert ist: Bestimmen eines Zielparallelmodus aus einer Vielzahl von Parallelmodi basierend auf Informationen über den Suchbaum und unter Verwendung eines neuronalen Netzwerkmodells und Lösen von mindestens einem des ersten Teilknotens und des zweiten Teilknotens parallel auf einer ersten Einrichtung und einer zweiten Einrichtung basierend auf dem Zielparallelmodus, wobei die Informationen über den Suchbaum mindestens eines von ersten Informationen und zweiten Informationen umfassen, wobei sich die ersten Informationen auf eine Anzahl von Teilknoten in dem Suchbaum beziehen und sich die zweiten Informationen auf eine Verbindungsbeziehung zwischen Teilknoten in dem Suchbaum beziehen.

8. Vorrichtung nach Anspruch 7, wobei die Vielzahl von Parallelmodi mindestens einen der folgenden Modi umfasst:

Lösen, auf der ersten Einrichtung, einer Vielzahl von Teilknoten, die in einem ersten Teilbaum, in dem sich der erste Teilknoten befindet, umfasst ist, und Lösen, auf der zweiten Einrichtung, einer Vielzahl von Teilknoten, die in einem zweiten Teilbaum, in dem sich der zweite Teilknoten befindet, umfasst ist, wobei der erste Teilbaum durch Lösen des ersten Teilknotens mittels Branch-and-Bound erlangt wird und der zweite Teilbaum durch Lösen des zweiten Teilknotens mittels Branch-and-Bound erlangt wird; oder

Lösen des ersten Teilknotens auf der ersten Einrichtung ohne Lösen eines anderen Teilknotens als des ersten Teilknotens und Lösen des zweiten Teilknotens auf der zweiten Einrichtung ohne Lösen eines anderen Teil-

22

knotens als des zweiten Teilknotens; oder

Lösen des ersten Teilknotens auf der ersten Einrichtung gemäß einem ersten Planungsalgorithmus und Lösen des ersten Teilknotens auf der zweiten Einrichtung parallel dazu gemäß einem zweiten Planungsalgorithmus.

9. Vorrichtung nach Anspruch 7 oder 8, wobei die ersten Informationen Folgendes umfassen:

eine Anzahl von Teilknoten von jeder einer Vielzahl von Tiefen in dem Suchbaum oder eine Anzahl von zu lösenden Teilknoten in dem Suchbaum, wobei die gemischte ganzzahlige Programmieraufgabe einem Wurzelknoten in dem Suchbaum entspricht und die Tiefe einen Abstand zwischen einem Teilknoten und dem Wurzelknoten anzeigt.

10. Vorrichtung nach einem der Ansprüche 7 bis 9, wobei das Parallelplanungsmodul insbesondere zu Folgendem konfiguriert ist:

Lösen des ersten Teilknotens oder des zweiten Teilknotens parallel auf der ersten Einrichtung und der zweiten Einrichtung basierend auf dem Zielparallelmodus, um einen aktualisierten Suchbaum zu erlangen, wobei der aktualisierte Suchbaum einen dritten Teilknoten und einen vierten Teilknoten umfasst und der dritte Teilknoten und der vierte Teilknoten zu lösende Teilknoten sind, die neu nach dem Lösen des ersten Teilknotens oder des zweiten Teilknotens hinzugefügt sind; und

Bestimmen eines Zielparallelmodus aus einer Vielzahl von Parallelmodi basierend auf Informationen über den aktualisierten Suchbaum und Lösen von mindestens einem des dritten Teilknotens und des vierten Teilknotens parallel auf der ersten Einrichtung und der zweiten Einrichtung basierend auf dem Zielparallelmodus, wobei die Vielzahl von Parallelmodi mindestens einen der folgenden Modi umfasst:

Lösen, auf der ersten Einrichtung, mittels Branch-and-Bound, einer Vielzahl von Teilknoten, die in einem dritten Teilbaum, in dem sich der dritte Teilknoten befindet, umfasst ist, und Lösen, auf der zweiten Einrichtung, einer Vielzahl von Teilknoten, die in einem vierten Teilbaum, in dem sich der vierte Teilknoten befindet, umfasst ist, wobei der dritte Teilbaum durch Lösen des dritten Teilknotens mittels Branch-and-Bound erlangt wird und der vierte Teilbaum durch Lösen des vierten Teilknotens mittels Branch-and-Bound erlangt wird; oder

Lösen des dritten Teilknotens auf der ersten Einrichtung ohne Lösen eines anderen Teilknotens als des dritten Teilknotens und Lösen nur des vierten Teilknotens auf der zweiten Einrichtung ohne Lösen eines anderen Teilknotens als des vierten Teilknotens; oder

Lösen des dritten Teilknotens auf der ersten Einrichtung gemäß dem ersten Planungsalgorithmus und Lösen des dritten Teilknotens auf der zweiten Einrichtung parallel dazu gemäß dem zweiten Planungsalgorithmus.

11. Vorrichtung nach einem der Ansprüche 7 bis 10, wobei das Parallelplanungsmodul insbesondere zu Folgendem konfiguriert ist:

Lösen einer voreingestellten Anzahl von Teilknoten, die in dem ersten Teilbaum, in dem sich der erste Teilknoten befindet, umfasst ist; oder

Lösen, innerhalb einer voreingestellten Zeit, einer Vielzahl von Teilknoten, die in dem ersten Teilbaum, in dem sich der erste Teilknoten befindet, umfasst ist.

12. Computerspeichermedium, wobei das Computerspeichermedium eine oder mehrere Anweisungen speichert und, wenn die Anweisungen durch einen oder mehrere Computer ausgeführt werden, der eine oder die mehreren Computer in die Lage versetzt werden, eine Operation in dem Verfahren nach einem der Ansprüche 1 bis 6 durchzuführen.

13. Computerprogrammprodukt, umfassend computerlesbare Anweisungen, wobei, wenn die computerlesbaren Anweisungen auf einer Computereinrichtung laufen, die Computereinrichtung in die Lage versetzt wird, das Verfahren nach einem der Ansprüche 1 bis 6 durchzuführen.

14. System, umfassend mindestens einen Prozessor, mindestens einen Speicher und mindestens eine Kommunikationsschnittstelle, wobei der Prozessor, der Speicher und die Kommunikationsschnittstelle über einen Kommunikationsbus verbunden sind und miteinander kommunizieren;

der mindestens eine Speicher dazu konfiguriert ist, Code zu speichern;
der mindestens eine Prozessor dazu konfiguriert ist, den Code auszuführen, das Aufgabenlösungsverfahren nach einem der Ansprüche 1 bis 6 durchzuführen und ein Lösungsergebnis zu erlangen; und

die mindestens eine Kommunikationsschnittstelle dazu konfiguriert ist, mit einer Einrichtung oder einem Kommunikationsnetzwerk zu kommunizieren, um das Lösungsergebnis an die Einrichtung oder das Kommunikationsnetzwerk zu senden.

**Revendications**

1. Procédé de résolution de tâche, dans lequel le procédé est mis en œuvre par ordinateur et comprend :

l'obtention (401) d'un arbre de recherche, dans lequel l'arbre de recherche est obtenu en résolvant une tâche de programmation linéaire en nombres entiers mixtes par la méthode de séparation et d'évaluation, l'arbre de recherche comprend une pluralité de sous-nœuds comprenant un premier sous-nœud et un deuxième sous-nœud, chaque sous-nœud correspond à une tâche enfant, et le premier sous-nœud et le deuxième sous-nœud sont des sous-nœuds à résoudre dans la pluralité de sous-nœuds ; et

la détermination (402) d'un mode parallèle cible à partir d'une pluralité de modes parallèles sur la base d'informations sur l'arbre de recherche et en utilisant un modèle de réseau neuronal, et la résolution d'au moins l'un du premier sous-nœud et du deuxième sous-nœud en parallèle sur un premier dispositif et un second dispositif sur la base du mode parallèle cible, dans lequel les informations sur l'arbre de recherche comprennent au moins l'une parmi des premières informations et des secondes informations, les premières informations sont liées à une quantité de sous-nœuds sur l'arbre de recherche, et les secondes informations sont liées à une relation de connexion entre les sous-nœuds sur l'arbre de recherche.

2. Procédé selon la revendication 1, dans lequel la pluralité de modes parallèles comprend au moins l'un des modes suivants :

la résolution, sur le premier dispositif, d'une pluralité de sous-nœuds compris sur un premier sous-arbre sur lequel le premier sous-nœud est situé, et la résolution, sur le second dispositif, d'une pluralité de sous-nœuds compris sur un deuxième sous-arbre sur lequel le deuxième sous-nœud est situé, dans lequel le premier sous-arbre est obtenu en résolvant le premier sous-nœud par la méthode de séparation et d'évaluation, et le deuxième sous-arbre est obtenu en résolvant le deuxième sous-nœud par la méthode de séparation et d'évaluation ; ou

la résolution du premier sous-nœud sur le premier dispositif sans résoudre un autre sous-nœud que le premier sous-nœud, et la résolution du deuxième sous-nœud sur le second dispositif sans résoudre un autre sous-nœud que le deuxième sous-nœud ; ou

la résolution du premier sous-nœud sur le premier dispositif selon un premier algorithme de planification, et la résolution du premier sous-nœud sur le second dispositif en parallèle selon un second algorithme de planification.

3. Procédé selon la revendication 1 ou 2, dans lequel les premières informations comprennent :

une quantité de sous-nœuds de chacune d'une pluralité de profondeurs sur l'arbre de recherche, ou une quantité de sous-nœuds à résoudre sur l'arbre de recherche, dans lequel la tâche de programmation linéaire en nombres entiers mixtes correspond à un nœud racine sur l'arbre de recherche, et la profondeur indique une distance entre un sous-nœud et le nœud racine.

4. Procédé selon l'une quelconque des revendications 1 à 3, dans lequel la résolution du premier sous-nœud ou du deuxième sous-nœud en parallèle sur un premier dispositif et un second dispositif sur la base du mode parallèle cible comprend :

la résolution du premier sous-nœud ou du deuxième sous-nœud en parallèle sur le premier dispositif et le second dispositif sur la base du mode parallèle cible, pour obtenir un arbre de recherche mis à jour, dans lequel l'arbre de recherche mis à jour comprend un troisième sous-nœud et un quatrième sous-nœud, et le troisième sous-nœud et le quatrième sous-nœud sont des sous-nœuds à résoudre nouvellement ajoutés après que le premier sous-nœud ou le deuxième sous-nœud est résolu ; et

le procédé comprend en outre :

la détermination d'un mode parallèle cible à partir d'une pluralité de modes parallèles sur la base d'informations sur à l'arbre de recherche mis à jour, et la résolution d'au moins l'un du troisième sous-nœud et du quatrième sous-nœud en parallèle sur le premier dispositif et le second dispositif sur la base du mode parallèle cible, dans lequel la pluralité de modes parallèles comprend au moins l'un des modes suivants :

la résolution, sur le premier dispositif par la méthode de séparation et d'évaluation, d'une pluralité de sous-nœuds compris sur un troisième sous-arbre sur lequel le troisième sous-nœud est situé, et la résolution, sur le second dispositif, d'une pluralité de sous-nœuds compris sur un quatrième sous-arbre sur lequel le quatrième sous-nœud est situé, dans lequel le troisième sous-arbre est obtenu en résolvant le troisième sous-nœud par la méthode de séparation et d'évaluation, et le quatrième sous-arbre est obtenu en résolvant le quatrième sous-nœud par la méthode de séparation et d'évaluation ; ou

la résolution du troisième sous-nœud sur le premier dispositif sans résoudre un autre sous-nœud que le troisième sous-nœud, et la résolution seulement du quatrième sous-nœud sur le second dispositif sans résoudre un autre sous-nœud que le quatrième sous-nœud ; ou

la résolution du troisième sous-nœud sur le premier dispositif selon le premier algorithme de planification, et la résolution du troisième sous-nœud sur le second dispositif en parallèle selon le second algorithme de planification.

5. Procédé selon l'une quelconque des revendications 1 à 4, dans lequel la résolution d'une pluralité de sous-nœuds compris sur un premier sous-arbre sur lequel le premier sous-nœud est situé comprend :

la résolution d'une quantité prédéfinie de sous-nœuds compris sur le premier sous-arbre sur lequel le premier sous-nœud est situé ; ou

la résolution, dans un délai prédéfini, d'une pluralité de sous-nœuds compris sur le premier sous-arbre sur lequel le premier sous-nœud est situé.

6. Procédé selon l'une quelconque des revendications 1 à 5, dans lequel la résolution d'une pluralité de sous-nœuds compris sur un deuxième sous-arbre sur lequel le deuxième sous-nœud est situé comprend :

la résolution d'une quantité prédéfinie de sous-nœuds compris sur le deuxième sous-arbre sur lequel le deuxième sous-nœud est situé ; ou

la résolution, dans un délai prédéfini, d'une pluralité de sous-nœuds compris sur le deuxième sous-arbre sur lequel le deuxième sous-nœud est situé.

7. Appareil de résolution de tâche (1100), dans lequel l'appareil comprend :

un module d'obtention (1101), configuré pour obtenir un arbre de recherche, dans lequel l'arbre de recherche est obtenu en résolvant une tâche de programmation linéaire en nombres entiers mixtes par la méthode de séparation et d'évaluation, l'arbre de recherche comprend une pluralité de sous-nœuds comprenant un premier sous-nœud et un deuxième sous-nœud, chaque sous-nœud correspond à une tâche enfant, et le premier sous-nœud et le deuxième sous-nœud sont des sous-nœuds à résoudre dans la pluralité de sous-nœuds ; et

un module de planification parallèle (1102), configuré pour : déterminer un mode parallèle cible à partir d'une pluralité de modes parallèles sur la base d'informations sur l'arbre de recherche et en utilisant un modèle de réseau neuronal, et résoudre au moins l'un du premier sous-nœud et du deuxième sous-nœud en parallèle sur un premier dispositif et un second dispositif sur la base du mode parallèle cible, dans lequel les informations sur l'arbre de recherche comprennent au moins l'une parmi des premières informations et des secondes informations, les premières informations sont liées à une quantité de sous-nœuds sur l'arbre de recherche, et les secondes informations sont liées à une relation de connexion entre les sous-nœuds sur l'arbre de recherche.

8. Appareil selon la revendication 7, dans lequel la pluralité de modes parallèles comprennent au moins l'un des modes suivants :

la résolution, sur le premier dispositif, d'une pluralité de sous-nœuds compris sur un premier sous-arbre sur lequel le premier sous-nœud est situé, et la résolution, sur le second dispositif, d'une pluralité de sous-nœuds compris sur un deuxième sous-arbre sur lequel le deuxième sous-nœud est situé, dans lequel le premier sous-arbre est obtenu en résolvant le premier sous-nœud par la méthode de séparation et d'évaluation, et le deuxième sous-arbre est obtenu en résolvant le deuxième sous-nœud par la méthode de séparation et d'évaluation ; ou

la résolution du premier sous-nœud sur le premier dispositif sans résoudre un autre sous-nœud que le premier sous-nœud, et la résolution du deuxième sous-nœud sur le second dispositif sans résoudre un autre sous-nœud que le deuxième sous-nœud ; ou

la résolution du premier sous-nœud sur le premier dispositif selon un premier algorithme de planification, et la résolution du premier sous-nœud sur le second dispositif en parallèle selon un second algorithme de planification.

**9.** Appareil selon la revendication 7 ou 8, dans lequel les premières informations comprennent :
une quantité de sous-nœuds de chacune d'une pluralité de profondeurs sur l'arbre de recherche, ou une quantité de sous-nœuds à résoudre sur l'arbre de recherche, dans lequel la tâche de programmation linéaire en nombres entiers mixtes correspond à un nœud racine sur l'arbre de recherche, et la profondeur indique une distance entre un sous-nœud et le nœud racine.

**10.** Appareil selon l'une quelconque des revendications 7 à 9, dans lequel le module de planification parallèle est spécifiquement configuré pour :

résoudre le premier sous-nœud ou le deuxième sous-nœud en parallèle sur le premier dispositif et le second dispositif sur la base du mode parallèle cible, pour obtenir un arbre de recherche mis à jour, dans lequel l'arbre de recherche mis à jour comprend un troisième sous-nœud et un quatrième sous-nœud, et le troisième sous-nœud et le quatrième sous-nœud sont des sous-nœuds à résoudre nouvellement ajoutés après que le premier sous-nœud ou le deuxième sous-nœud est résolu ; et
déterminer un mode parallèle cible à partir d'une pluralité de modes parallèles sur la base d'informations relatives à l'arbre de recherche mis à jour, et la résolution d'au moins l'un du troisième sous-nœud et du quatrième sous-nœud en parallèle sur le premier dispositif et le second dispositif sur la base du mode parallèle cible, dans lequel la pluralité de modes parallèles comprennent au moins l'un des modes suivants :

résoudre, sur le premier dispositif par la méthode de séparation et d'évaluation, une pluralité de sous-nœuds compris sur un troisième sous-arbre sur lequel le troisième sous-nœud est situé, et la résolution, sur le second dispositif, d'une pluralité de sous-nœuds compris sur un quatrième sous-arbre sur lequel le quatrième sous-nœud est situé, dans lequel le troisième sous-arbre est obtenu en résolvant le troisième sous-nœud par la méthode de séparation et d'évaluation, et le quatrième sous-arbre est obtenu en résolvant le quatrième sous-nœud par la méthode de séparation et d'évaluation ; ou
résoudre le troisième sous-nœud sur le premier dispositif sans résoudre un autre sous-nœud que le troisième sous-nœud, et la résolution seulement du quatrième sous-nœud sur le second dispositif sans résoudre un autre sous-nœud que le quatrième sous-nœud ; ou
résoudre le troisième sous-nœud sur le premier dispositif selon le premier algorithme de planification, et la résolution du troisième sous-nœud sur le second dispositif en parallèle selon le second algorithme de planification.

**11.** Appareil selon l'une quelconque des revendications 7 à 10, dans lequel le module de planification en parallèle est spécifiquement configuré pour :

résoudre une quantité prédéfinie de sous-nœuds compris sur le premier sous-arbre sur lequel le premier sous-nœud est situé ; ou
résoudre, dans un délai prédéfini, une pluralité de sous-nœuds compris sur le premier sous-arbre sur lequel le premier sous-nœud est situé.

**12.** Support de stockage informatique, dans lequel le support de stockage informatique stocke une ou plusieurs instructions, et lorsque les instructions sont exécutées par un ou plusieurs ordinateurs, les un ou plusieurs ordinateurs sont activés pour réaliser une opération dans le procédé selon l'une quelconque des revendications 1 à 6.

**13.** Produit de programme informatique, comprenant des instructions lisibles par ordinateur, dans lequel lorsque les instructions lisibles par ordinateur fonctionnent sur un dispositif informatique, le dispositif informatique est activé pour réaliser le procédé selon l'une quelconque des revendications 1 à 6.

**14.** Système, comprenant au moins un processeur, au moins une mémoire, et au moins une interface de communication, dans lequel le processeur, la mémoire, et l'interface de communication sont connectés et communiquent entre eux par le biais d'un bus de communication ;

l'au moins une mémoire est configurée pour stocker du code ; l'au moins un processeur est configuré pour exécuter le code, pour réaliser le procédé de résolution de tâche selon l'une quelconque des revendications 1 à 6, pour obtenir un résultat de résolution ; et
l'au moins une interface de communication est configurée pour communiquer avec un dispositif ou un réseau de communication, pour envoyer le résultat de résolution au dispositif ou au réseau de communication.

FIG. 1

FIG. 2

FIG. 3a

FIG. 3b

Obtain a search tree, where the search tree is obtained by solving a mixed integer programming task through branch and bound, the search tree includes a plurality of subnodes including a first subnode and a second subnode, each subnode corresponds to one child task, and the first subnode and the second subnode are to-be-solved subnodes in the plurality of subnodes ⟋ 401

Determine a target parallel mode from a plurality of parallel modes based on information about the search tree, and solve at least one of the first subnode and the second subnode in parallel on a first device and a second device based on the target parallel mode ⟋ 402

FIG. 4

Management node (coordinator)

Select nodes

1 ... n

Deliver the nodes to function instances

Function instance 1 ... Function instance n

Subtree granularity parallelism strategy

1 n

FIG. 5

FIG. 6

FIG. 7

① Submit a task

⑦ Return a result

② **Input features:**
information about a topology structure of a dynamic search tree, a quantity of to-be-solved nodes, and the like

③ **Output a decision:**
parallelism dimension (X) & degree of parallelism (K)

④ When the parallelism dimension X is 0, K function instances are invoked to **perform parallelism between subtrees**
When the parallelism dimension X is 1 or 2, K function instances are invoked to **perform parallelism between nodes**

⑥ Computing ends
Synchronize a status

⑤ If the parallelism dimension X=2, $\eta$ function instances are invoked to **perform parallelism between intra-nodes**

Coordinator (Stateful)

Scheduler (intelligent decision-making parallelism strategy)

Worker (Stateful)

LP_i (Stateless)

FIG. 8

FIG. 9

FIG. 10

EP 4 506 872 B1

1100

1101                                    1102

| Obtaining module | | Parallel scheduling module |

FIG. 11

1200

Terminal device

Antenna                                    Antenna

| Receiver 1201 | Transmitter 1202 |

Processor 1203

| Memory 1204 | Application processor 12031 | Communication processor 12032 |

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **T. RALPHS**. *Parallel Solvers for Mixed Integer Linear Optimization*